(19) Europäisches Patentamt
European Patent Office
Office européen des brevets

(11) **EP 4 164 840 B1**

(12) **EUROPÄISCHE PATENTSCHRIFT**

(45) Veröffentlichungstag und Bekanntmachung des Hinweises auf die Patenterteilung:
**10.04.2024  Patentblatt 2024/15**

(21) Anmeldenummer: **21732804.6**

(22) Anmeldetag: **10.06.2021**

(51) Internationale Patentklassifikation (IPC):
**B25J 9/16** *(2006.01)*

(52) Gemeinsame Patentklassifikation (CPC):
**B25J 9/1643;** B25J 9/1633; G05B 2219/39187;
G05B 2219/39197; G05B 2219/39338;
G05B 2219/40336; G05B 2219/40338;
G05B 2219/40358; G05B 2219/40367;
G05B 2219/40372

(86) Internationale Anmeldenummer:
**PCT/EP2021/065699**

(87) Internationale Veröffentlichungsnummer:
**WO 2021/250201 (16.12.2021 Gazette 2021/50)**

(54) **VERFAHREN UND COMPUTERPROGRAMMPRODUKT ZUM REGELN EINES ROBOTERS**

METHOD AND COMPUTER PROGRAM PRODUCT FOR CONTROLLING A ROBOT

PROCÉDÉ ET PRODUIT PROGRAMME D'ORDINATEUR POUR COMMANDER UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2020  DE 102020115517**

(43) Veröffentlichungstag der Anmeldung:
**19.04.2023  Patentblatt 2023/16**

(73) Patentinhaber: **Deutsches Zentrum für Luft- und Raumfahrt e.V.
53227 Bonn (DE)**

(72) Erfinder:
• **ENGLSBERGER, Johannes
82234 Weßling (DE)**
• **GAROFALO, Gianluca
82234 Weßling (DE)**
• **MESESAN, George, Adrian
82234 Weßling (DE)**

(74) Vertreter: **Ege Lee & Roider Patentanwälte
Wilhelm-Wagenfeld-Straße 24
80807 München (DE)**

(56) Entgegenhaltungen:
**WO-A1-2021/123057**

• **CISNEROS RAFAEL ET AL: "QP-based task-space hybrid / parallel control for multi-contact motion in a torque-controlled humanoid robot", 2019 IEEE-RAS 19TH INTERNATIONAL CONFERENCE ON HUMANOID ROBOTS (HUMANOIDS), IEEE, 15. Oktober 2019 (2019-10-15), Seiten 663-670, XP033740754, DOI: 10.1109/HUMANOIDS43949.2019.9035038 [gefunden am 2020-03-12]**
• **CISNEROS RAFAEL ET AL: "Robust Humanoid Control Using a QP Solver with Integral Gains", 2018 IEEE/RSJ INTERNATIONAL CONFERENCE ON INTELLIGENT ROBOTS AND SYSTEMS (IROS), IEEE, 1. Oktober 2018 (2018-10-01), Seiten 7472-7479, XP033490715, DOI: 10.1109/IROS.2018.8593417 [gefunden am 2018-12-27]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Regeln eines kinematisch redundanten Roboters, um mehrere Tasks zu erfüllen. Außerdem betrifft die Erfindung ein Computerprogrammprodukt zum Ausführen eines derartigen Verfahrens.

Die simultane Regelung mehrerer Aufgaben, sogenannter "Tasks", stellt ein wichtiges Forschungsthema auf dem Gebiet der Roboter-Regelung dar. Während frühere Arbeiten den einfacheren Fall der Regelung eines einzigen Tasks und des entsprechenden Nullraumes, also der verbleibenden Roboter-Freiheitsgrade, für kinematisch redundante Roboter betrachteten, so existieren heute mehrere etablierte Methoden, welche die Behandlung mehrerer Tasks mit und ohne Prioritäten ermöglichen. Die Literatur unterscheidet Arbeiten, die das Task-Koordinationsproblem zunächst auf kinematischer Ebene lösen, von Arbeiten, welche das Regelungsproblem direkt auf der Dynamik-Ebene behandeln. Eine weitere wichtige Klassifikationsmöglichkeit besteht in der Einteilung in Verfahren, welche durch hierarchische Regler strikte Task-Prioritäten erzwingen, und andere Verfahren, welche eine softe oder weiche Priorisierung durch Task-Gewichtung erzeugen.

Auf der Kinematik-Ebene wurden mit den Veröffentlichungen Y. Nakamura, H. Hanafusa, and T. Yoshi Kawa. Taskpriority based redundancy control of robot manipulators. The International Journal of Robotics Research, 6(2): 3-15, 1987. doi: 10.1177/027836498700600201. und G. Antonelli. Stability Analysis for Prioritized closedloop inverse kinematic algorithms for redundant robotic systems. IEEE Transactions on Robotics, 25(5):985-994, 2009. hierarchische Regler vorgeschlagen, welche auf Nullraum-Projektionen beruhen und eine strikte Task-Hierarchie garantieren. Um dem Problem möglicher Task-Singularitäten zu begegnen, wurde in der Veröffentlichung F. Kanehiro, H. Hirukawa, and S. Kajita. Openhrp: Open Architecture Humanoid Robotics Platform. The International Journal of Robotics Research, 23(2):155-165, 2004. doi: 10.1177/0278364904041324. eine singularitätsrobuste Inversekinematikmethode vorgeschlagen. Allerdings geht durch diese singularitäts-robuste Inverskinematik die strikte Task-Hierarchie verloren, da hierdurch im Endeffekt eine Gewichtung zwischen den einzelnen Tasks erzeugt wird.

Andere Verfahren behandeln mehrere Tasks gleichzeitig auf der Dynamik-Ebene. Das "Operational Space" Verfahren wurde weiterentwickelt, um die Regelung humanoider Roboter zu ermöglichen. Dazu wird auf die Veröffentlichungen L. Sentis and O. Khatib. Synthesis of Whole-Body behaviors through hierarchical control of behavioral primitives. International Journal of Humanoid Robotics, 2(4): 505-518, 2005. und L. Sentis, J. Park, and O. Khatib. Compliant Control of multicontact and center-of-mass behaviors in humanoid robots. IEEE Transactions on Robotics, 26(3):483-501, 2010. verwiesen. Andere auf "Inverse Dynamics" (ID) basierende Verfahren verwenden hierarchische Quadratische Programme (QP). Dazu wird auf die Veröffentlichungen J. Peters, M. Mistry, F. Udwadia, J. Nakanishi, and S. Schaal. A unifying framework for robot control with redundant dofs. Autonomous Robots, 24:1-12, 2008. doi: 10.1007/s10514-007-9051-x., Adrien Escande, Nicolas Mansard, and Pierre-Brice Wieber. Hierarchical quadratic programming: fast online humanoidrobot motion generation. The International Journal of Robotics Research, 33(7):1006-1028, 2014. doi: 10.1177/0278364914521306. und K. Bouyarmane and A. Kheddar. On Weight-Prioritized multitask control of humanoid robots. IEEE Transactions on Automatic Control, 63(6):1632-1647, June 2018. ISSN 2334-3303. doi: 10.1109/TAC.2017.2752085. verwiesen. Die meisten der genannten Verfahren zielen auf eine strikte Task-Entkopplung ab. Hierdurch wird beispielsweise, zumindest in der Theorie, sichergestellt, dass sich unterschiedliche Tasks nicht gegenseitig beeinflussen, und ebenso das jeweilige Einschwingverhalten einzelner Tasks nach Störungen völlig unabhängig von anderen Task-Koordinaten ist.

Das hier vorgestellte Verfahren ist durch die Familie von Inverse Dynamics basierten Tracking-Reglern inspiriert, welche durch die Verwendung eines einzigen gewichteten Quadratischen Programmes (QP) einen sanften Kompromiss zwischen einer Reihe von Tasks anstreben. Dazu wird auf die Veröffentlichungen M. A. Hopkins, D. W. Hong, and A. Leonessa. Compliant locomotion using whole-body control and divergent component of motion tracking. In IEEE Int. Conf. on Robotics and Automation (ICRA), pages 5726-5733, May 2015. doi: 10.1109/ICRA.2015.7140001., T. Koolen, S. Bertrand, G. Thomas, T. de Boer, T. Wu, J. Smith, J. Englsberger, and J. Pratt. Design of a Momentum-Based Control Framework and application to the humanoid robot atlas. International Journal of Humanoid Robotics, 13(01):1650007, 2016. doi: 10.1142/S0219843616500079. Und J. Englsberger, G. Mesesan, A. Werner, and C. Ott. Torque-Based Dynamic Walking - a long way from simulation to experiment. In IEEE Int. Conf. on Robotics and Automation (ICRA), pages 440-447, 2018. verwiesen. Solche Regler sind sehr einfach zu implementieren und zeichnen sich durch ihre hohe Flexibilität aus. Im Vergleich zu passivitäts-basierten Verfahren gemäß den Veröffentlichungen B. Paden and B. Riedle. A Positive-Real Modification of a dass of nonlinear controllers for robot manipulators. In 1988 American Control Conference, pages 1782-1785, June 1988. doi: 10.23919/ACC.1988.4790015., A. Dietrich. Whole-Body Impedance Control of Wheeled Humanoid Robots, volume 116. Springer International Publishing, 2016. ISBN 978-3-319-40557-5., B. Henze, M. A. Roa, and Ch. Ott. Passivity-based whole-body balancing for torque-controlled humanoid robots in multi-contact scenarios. The International Journal of Robotics Research, 35(12):1522-1543, 2016. doi: 10.1177/0278364916653815., G. Mesesan, J. Englsberger, G. Garofalo, C. Ott, and15:47 10.06.2020 A. Albu-Schäffer. Dynamic walking on compliant and uneven terrain using dem and passivity-based wholebody control. In IEEE-RAS 19th Int. Conf. on Humanoid Robots (Humanoids), pages 25-32, 2019. und A. Dietrich and C. Ott. Hierarchical Impedance-Based tracking control of kinematically redundant robots. IEEE Transactions on Robotics, 36(1):204-221, 2020. ISSN 1941-0468. doi: 10.1109/TRO.2019.2945876. sind Inverse Dynamics basierte Regler allerdings weniger robust in Bezug auf Modellfehler und Kontaktunsicherheiten, sodass im realen Einsatz Probleme wie beispielsweise Vibrationen auftreten, welche dann wiederum mittels heuristischer Methoden behandelt werden müssen.

Weiterhin ist das vorgestellte Verfahren sowohl durch den gewichtungs-basierten Multitasking Regler aus der Veröffentlichung K. Bouyarmane and A. Kheddar. On Weight-Prioritized multitask control of humanoid robots. IEEE Transactions on Automatic Control, 63(6):1632-1647, June 2018. ISSN 2334-3303. doi: 10.1109/TAC.2017.2752085. inspiriert, als auch durch den strikt hierarchischen passivitäts-basierten Regler aus der Veröffentlichung A. Dietrich and C. Ott. Hierarchical Impedance-Based tracking control of kinematically redundant robots. IEEE Transactions on Robotics, 36(1):204-221, 2020. ISSN 1941-0468. doi: 10.1109/TRO.2019.2945876. Ähnlich wie in der Veröffentlichung K. Bouyarmane and A. Kheddar. On Weight-Prioritized multitask control of humanoid robots. IEEE Transactions on Automatic Control, 63(6):1632-1647, June 2018. ISSN 2334-3303. doi: 10.1109/TAC.2017.2752085. verwendet das vorgestellte Verfahren ein Quadratisches Programm (QP), um die Regelungsziele der einzelnen Tasks zu vereinigen bzw. gegeneinander abzuwägen. Hierbei wird allerdings in der Veröffentlichung K. Bouyarmane and A. Kheddar. On Weight-Prioritized multitask control of humanoid robots. IEEE Transactions on Automatic Control, 63(6):1632-1647, June 2018. ISSN 2334-3303. doi: 10.1109/TAC.2017.2752085. jeder der zu den einzelnen Tasks gehörigen Regler basierend auf Inverse Dynamics berechnet, wobei eine Einheitsmatrix als gewünschte Trägheit verwendet wird, was einer Feedback Linearisierung entspricht. Im Gegensatz hierzu berechnet das vorgestellte Verfahren die zu den einzelnen Tasks gehörigen Regler basierend auf dem Konzept der Passivität und verwendet die natürliche Trägheit des Roboters, so dass ein Verhalten ähnlich dem eines PD+ Reglers erzielt wird. Im Gegensatz zum aus der Veröffentlichung A. Dietrich and C. Ott. Hierarchical Impedance-Based tracking control of kinematically redundant robots. IEEE Transactions on Robotics, 36(1):204-221, 2020. ISSN 1941-0468. doi: 10.1109/TRO.2019.2945876. bekannten Verfahren, welches ebenfalls auf der Verwendung der natürlichen Trägheit für den Regelungsansatz basiert, verwendet das vorgestellte Verfahren eine gewichtete QP Formulierung, also eine weiche Priorisierung, wodurch es möglich wird, eine beliebige Anzahl von verschiedenen Tasks zu kombinieren, wobei das Verfahren außerdem in bestimmten Situationen, wie beispielsweise beim Auftreten einer Task-Singularität, zu einem weniger aggressiven Verhalten führt.

Die Veröffentlichung "CISNEROS RAFAEL ET AL: "QP-based task-space hybrid / parallel control for multi-contact motion in a torque-controlled humanoid robot", 2019 IEEE-RAS 19TH INTERNATIONAL CONFERENCE ON HUMANOID ROBOTS (HUMANOIDS), IEEE, 15. Oktober 2019 (2019-10-15), Seiten 663-670, XP033740754, Task-Space-Hybrid-/Parallelsteuerung für Multikontaktbewegungen in einem drehmomentgesteuerten humanoiden Roboter und erweitert ein früheres QPbasiertes System zur robusten Drehmomentkontrolle, um eine Kraftkontrolle zu ermöglichen, die keine Rückmeldung des gemeinsamen Drehmoments erfordert. Die Steuerung stützt sich nur auf Kraft-/Drehmomentsensoren an den Endeffektoren, Gelenkgebern und IMUs für kinematisches Feedback. Außerdem ist sie so formuliert, dass sie mit dem internen Zustand des QP-Lösers konsistent bleibt.

Die Veröffentlichung "CISNEROS RAFAEL ET AL: "Robust Humanoid Control Using a QP Solver with Integral Gains", 2018 IEEE/RSJ INTERNATIONAL CONFERENCE ON INTELLIGENT ROBOTS AND SYSTEMS (IROS), IEEE, 1. Oktober 2018 (2018-10-01), Seiten 7472-7479, XP033490715, DOI: 10.1109/IROS.2018.8593417" befasst sich mit einer robusten Steuerung von Humanoiden unter Verwendung eines QP-Lösers mit integralen Verstärkungen. Vorgeschlagen wird ein Regelungsrahmen für drehmomentgesteuerte humanoide Roboter, der den Nachführfehler in einer quadratischen Programmierung (QP), die als gewichtete Mehrzielaufgabe mit Nebenbedingungen formuliert ist, effizient minimiert. Das Ergebnis ist eine optimale, dynamisch realisierbare Referenz, die robust und mit exponentieller Konvergenz verfolgt werden kann, ohne gemeinsames Drehmoment-Feedback, in Gegenwart von nicht modellierten Drehmomentverzerrungen und niederfrequenten, begrenzten Störungen. Dies wird durch die Einführung integraler Verstärkungen in einer Lyapunov-stabilen Drehmomentsteuerung erreicht, die die Passivitätseigenschaften des dynamischen Modells des Roboters und ihre Auswirkungen auf die dynamischen Beschränkungen des QP-Lösers ausnutzen.

Aus dem Dokument WO 2021/123057 A1 ist ein modularer konfigurierbarer Roboter bekannt.

Der Erfindung liegt die Aufgabe zugrunde, ein eingangs genanntes Verfahren zu verbessern. Außerdem liegt der Erfindung die Aufgabe zugrunde, ein eingangs genanntes Computerprogrammprodukt bereitzustellen.

Die Aufgabe wird gelöst mit einem Verfahren mit den Merkmalen des Anspruchs 1. Außerdem wird die Aufgabe gelöst mit einem Computerprogrammprodukt mit den Merkmalen des Anspruchs 15. Vorteilhafte Ausführungen und/oder Weiterbildungen sind Gegenstand der Unteransprüche.

Das Verfahren kann zum regelungstechnischen Kontrollieren des Roboters dienen. Das Verfahren kann beispielsweise in der Servicerobotik, in der Medizinrobotik, in der Industrie 4.0, im Bereich einer robotischen Assistenz für Astronauten eingesetzt werden. Das Verfahren kann grundsätzlich überall dort eingesetzt werden, wo kraft-/drehmomentgeregelte Roboter mit kinematischer Redundanz eingesetzt werden können und sowohl eine hohe Präzision als auch eine nachgiebige Mensch-Roboter-Interaktion bzw. Umgebungs-Roboter-Interaktion gewünscht sind.

Ein kinematisch redundanter Roboter kann derart viele Freiheitsgrade aufweisen, dass mehrere Aufgaben oder Tasks gleichzeitig umgesetzt werden können. Die Tasks können voneinander unabhängig sein. Die Tasks können zumindest teilweise gleichzeitig ausführbar sein. Der Roboter kann kraftgeregelt und/oder drehmomentgeregelt sein. Das passivitäts-basierte Reglermodul kann ein impedanzbasiertes Reglermodul sein. Der Begriff "Passivität" wird vorliegend insbesondere zur Abgrenzung einer "Aktivität" verwendet, bei der eine ungewollte Energiezunahme im System auftritt.

Der Begriff "Task-Zielbeschreibung" beschreibt vorliegend insbesondere eine Größe, welche sich aus einer Kombination von Termen ergibt, die der eigentlichen Zielsetzung des jeweiligen Tasks entsprechen, mit entsprechenden Vorsteuerungs- bzw. Kompensations-Termen. Die entsprechende Zielsetzung des Tasks kann beispielsweise aus einem nominellen Tracking einer Referenztrajektorie und/oder auch, vorteilhafterweise gleichzeitig, aus dem nachgiebigen Impedanzverhalten, beispielsweise im Falle einer Interaktion mit der Umgebung, einem Objekt oder einem Menschen, bestehen. Die Vorsteuerungs- und/oder Kompensations-Terme können beispielsweise Gravitations-Effekte sowie Coriolis- und/oder Zentrifugal-Effekte ganz oder teilweise kompensieren, um das eigentliche Wunsch-Verhalten und/oder die eigentliche Wunsch-Dynamik zu erzeugen.

Der Begriff "Task-Mapping" beschreibt vorliegend insbesondere eine Größe, welche den Zusammenhang zwischen den gegebenen Stellgrößen und/oder Regelungsinputs und der jeweiligen vorgenannten Task-Zielbeschreibung herstellt. Die Stellgrößen und/oder Regelungsinputs können beispielsweise aus stellbaren Drehmomenten in den Roboter-Gelenken, sowie, im Falle von free-floating Robotern wie zum Beispiel humanoiden Robotern, auch aus Kontaktkräften bestehen, welche sich unter bestimmten Voraussetzungen aus den Zwangsbedingungen zwischen den Gelenk-Drehmomenten und gegebenen Endeffekor-Beschleunigungen, also beispielsweise Roboter-Fuß-Beschleunigungen, ergeben.

Die wenigstens eine Task-Zielbeschreibung und das wenigstens eine zugehörige Task-Mapping können derart berechnet werden, dass ein nominelles Verhalten des wenigstens einen ersten Reglermoduls dem Verhalten eines Feder-Masse-Dämpfer-Systems entspricht.

Die wenigstens eine Task-Zielbeschreibung und das wenigstens eine zugehörige Task können basierend auf einer natürlichen Roboter-Trägheit berechnet werden.

Die wenigstens eine Task-Zielbeschreibung und das wenigstens eine zugehörige Task-Mapping können derart berechnet werden, dass taskspezifische Coriolis- und Zentrifugal-Effekte ungeändert bleiben, während alle übrigen Coriolis- und Zentrifugal-Effekte kompensiert werden.

Die wenigstens eine Task-Zielbeschreibung kann als Task-Vektor berechnet werden. Der Task-Vektor kann eine Kraft, eine Kraftrichtung, ein Moment und/oder eine Momentrichtung angeben. Die gewünschte Task-Kraft $f_{k,des}$ in Gleichung (17) stellt einen solchen Task-Vektor dar. Weiterhin können die einzelnen Task-Vektoren vorteilhafterweise zu einem kombinierten Task-Vektor zusammengefasst werden. Die in Gleichung (21) beschriebene "Kombination aller gewünschten Task-Kräfte" $f_{des}$ stellt ein Beispiel für einen solchen kombinierten Task-Vektor dar.

Das wenigstens eine zugehörige Task-Mapping kann als Task-Mapping-Matrix berechnet werden. Die Task-Mapping-Matrix kann auch als mapping matrix (T) oder mapping matrix (U) bezeichnet werden. Die in Gleichung (12) beschriebene Matrix $T_k$, welche als "dynamisch konsistente Pseudo-Inverse" der Transponierten der Task-Jacobian Matrix $J_k$ bezeichnet werden kann, stellt ein Beispiel für eine solche Task-Mapping-Matrix dar. Die einzelnen Task-Mapping-Matrizen können vorteilhafterweise auch, wie in Gleichung (22) beschrieben, in einer vereinigten Task-Mapping-Matrix $T$ kombiniert werden.

Wenigstens ein weiteres Reglermodul kann in den Gesamtregler integriert werden. Wenigstens ein als Zwangsbedingung formuliertes weiteres Reglermodul kann in den Gesamtregler integriert werden.

Das wenigstens eine erste Reglermodul wird gewichtet. Das wenigstens eine weitere Reglermodul kann gewichtet werden. Zur Gewichtung wird eine Gewichtungs-Matrix verwendet. Die Gewichtungs-Matrix kann auch als weighting matrix (W) bezeichnet werden.

Das wenigstens eine erste Reglermodul und/oder das wenigstens eine weitere Reglermodul können/kann derart gewichtet werden, dass der Gesamtregler auch bei einem überbestimmten Regelungsproblem ein zumindest annähernd passives Verhalten aufweist.

Das wenigstens eine erste Reglermodul und/oder das wenigstens eine weitere Reglermodul können/kann mithilfe wenigstens einer Pseudo-Inversen und/oder wenigstens einer Inversen optimiert werden.

Das wenigstens eine erste Reglermodul und/oder das wenigstens eine weitere Reglermodul können/kann mithilfe wenigstens einer Optimierungsvariablen optimiert werden. Das wenigstens eine erste Reglermodul und/oder das wenigstens eine weitere Reglermodul können/kann quadratisch optimiert werden. Die quadratische Optimierung kann durch eine einzige Instanz oder durch mehrere Instanzen ausgeführt werden.

Wenigstens eines der Reglermodule kann als Tracking-Regler ausgeführt werden. Wenigstens eines der Reglermodule kann als Regulation-Regler ausgeführt werden. Jedem regelbaren Freiheitsgrad kann ein gesondertes Reglermodul zugeordnet werden.

Das Computerprogrammprodukt kann auf einem computerlesbaren Speichermedium, auf einem computerlesbaren Datenträger oder als Datenträgersignal vorliegen.

Das Verfahren kann folgende Schritte aufweisen: a) Berechnung der gewünschten Task-Kräfte sowie der zugehörigen Task-Mapping Matrizen für sämtliche passiven Tracking-Regler-Module, wobei das nominelle Verhalten der passiven Tracking-Regler-Module dem von Feder-Masse-Dämpfer Systemen entspricht, wobei weiterhin die natürliche Trägheit des Roboters erhalten wird und wobei weiterhin die task-spezifischen Coriolis- und Zentrifugal-Effekte unberührt bleiben, während alle übrigen Coriolis- und Zentrifugal-Effekte kompensiert werden; b) Berechnung der speziellen passivitäts-garantierenden bzw. passivitäts-fördernden Gewichtungsmatrizen für sämtliche Tasks, c) Integration und Kombination der einzelnen passiven Tracking-Regler-Module durch Optimierung zu einem Gesamtregler unter Verwendung der speziellen passivitäts-garantierenden bzw. passivitäts-fördernden Gewichtungsmatrizen.

In Verfahrensschritt c) können zusätzlich zu den passiven Tracking-Regler-Modulen auch andere Regler bzw. Reglermodule integriert werden. In Verfahrensschritt c) kann/können zusätzlich zu den gewichteten Tasks auch ein oder mehrere Tasks als Zwangsbedingung formuliert und entsprechend durch die Optimierung in den Gesamt-Regler integriert werden. In Verfahrensschritt c) kann eine Pseudo-Inverse für die Optimierung verwendet werden. In Verfahrensschritt c) kann die Optimierung auf dem Konzept der Quadratischen Optimierung bzw. des "Quadratic Programming" (QP) beruhen.

Die Erfindung kann ein Regler-Modul zur Regelung von drehmoment-basierten Robotern betreffen. Das Regler-Modul kann eine Task-Mapping-Matrix sowie einen gewünschten Task-Vektor aufweisen, wobei ein nominelles Verhalten des Regler-Moduls einem Feder-Masse-Dämpfer System entsprechen kann.

Die entsprechende Masse bzw. Trägheit der natürlichen Masse bzw. Trägheit des Roboters, gegebenenfalls projiziert in den entsprechenden Taskspace, kann, was als Compliance-Verhalten bezeichnet wird, also einem Impedanzverhalten entsprechen, welches auf der natürlichen Roboter-Masse bzw. der natürlichen Roboter-Trägheit basiert und somit auf das sogenannte Trägheits-Shaping verzichtet.

Die task-spezifischen Coriolis- und Zentrifugal-Effekte können unberührt bleiben, während alle übrigen Coriolis- und Zentrifugal-Effekte kompensiert werden, wodurch die Passivität des Regler-Moduls erzielt werden kann.

Das Regler-Modul kann als Tracking-Regler ausgeführt sein. Das Regler-Modul kann als Regulation-Regler ausgeführt sein und somit auf eine Vorsteuerung verzichten.

Einer beliebige Anzahl von derartige Regler-Modulen kann zu einem Gesamt-Regler kombiniert sein. Eine beliebige Anzahl von derartigen Regler-Modulen sowie eine beliebige Anzahl anderer Regler bzw. Regler-Module kann zu einem Gesamt-Regler kombiniert sein.

Die Erfindung kann einen derartigen Gesamt-Regler betreffen, wobei eine sanfte oder softe Priorisierung mittels Gewichtung der Tasks, entsprechend der Regler-Module, erfolgen kann.

Die Gewichtung der den Regler-Modulen entsprechenden Tasks kann derart ausgestaltet sein, dass die Passivität des Gesamt-Reglers garantiert wird bzw. ein Verhalten des Gesamt-Reglers erzeugt wird, welches bestmöglich an ein passives Verhalten herankommt, selbst wenn sich die Zielsetzungen der einzelnen Tasks widersprechen und somit ein überbestimmtes Regelungsproblem vorliegt.

Zusätzlich kann/können ein Task oder mehrere Tasks als harte Zwangsbedingung formuliert sein, während alle übrigen Tasks auf derartigen Regler-Modulen basieren und durch eine sanfte Gewichtung berücksichtigt werden bzw. in den Gesamt-Regler integriert werden.

Zur Lösung des Regelungsproblems kann eine Quadratische Optimierung zum Einsatz kommen, was sowohl durch eine einzige Instanz zur Quadratischen Optimierung als auch durch mehrere Instanzen zur Quadratischen Optimierung ausgeführt sein kann.

Zur Lösung des Regelungsproblems kann/können eine oder mehrere Pseudo-Inverse oder Inverse zum Einsatz kommen.

Jedem regelbaren Freiheitsgrad kann ein eigenes Regler-Modul zugeordnet werden, wodurch eine maximale Granularität bzw. die maximal mögliche Entkopplung der einzelnen Task-Regler erreicht wird.

Zusammenfassend und mit anderen Worten dargestellt ergibt sich somit durch die Erfindung unter anderem ein modularer passiver Tracking-Regler für kraft-/drehmomentgeregelte Roboter.

Der erfindungsgemäße Regler erlaubt eine präzise und gleichzeitig nachgiebige, sowie robuste Regelung von redundanten Robotersystemen. Dies wird erreicht durch den Einsatz von passivitäts-basierten Regler-Modulen, welche mittels verschiedener Optimierungsverfahren (in Abhängigkeit von der vorliegenden Problemstellung) zu einem Gesamtregler kombiniert werden. Durch den Einsatz einer speziellen Gewichtung der verschiedenen Tasks wird die Passivität des Gesamtreglers, wiederum in Abhängigkeit von der vorliegenden Problemstellung, entweder garantiert oder zumindest gefördert. Diese spezielle Gewichtung beruht darauf, dass für die einzelnen Tasks die jeweilige invertierte Task-Trägheitsmatrix multipliziert mit einer skalaren Task-Gewichtungszahl als Gewicht zum Einsatz kommt. Reglerentwurf und -analyse beruhen auf dem Konzept der Passivität bzw. auf Lyapunov Theorie, wodurch die hohe Robustheit der Regelung erzielt wird.

Das vorliegende Verfahren erweist sich als robust gegenüber Singularitäten, robust gegenüber Modellierungsfehlern und Messrauschen, sehr flexibel einsetzbar (Änderung der Reglerstruktur ohne weiteres online möglich, Kombination mit anderen Reglermethoden ohne weiteres möglich), sowie als sehr robust beim Kontakt mit der Umgebung. Der Tuningaufwand während realen Experimenten bzw. für reale Anwendungen ist sehr gering. Es können beliebig viele Tasks miteinander kombiniert werden; jeder Task trägt entsprechend ihrer Gewichtung zum Gesamtergebnis bei.

Somit vereint das vorliegende Verfahren die wichtigsten Vorteile aller im Stand der Technik beschriebenen Verfahren für die Regelung von redundanten, drehmomentgeregelten Robotersystemen, während sämtliche Nachteile vermieden werden.

Das vorliegende Verfahren deckt nahezu das gesamte Spektrum zwischen Inverse Dynamics basierten Reglern und den sehr robusten, sogenannten PD+ basierten Reglern ab. Die Granularität der gewünschten Entkopplung bzw. die Modularität der einzelnen Sub-Regler ist frei wählbar.

Das technische Gebiet, welches durch die vorliegende Erfindung insbesondere adressiert wird, ist die Regelung von redundanten, drehmomentgeregelten Robotersystemen. Hierbei stellt die Lösung von Multitasking-Aufgabenstellungen ein schwieriges Problem dar, insbesondere im Hinblick auf Stabilität und Passivität des Gesamtreglers, präzises Tracking von gewünschten Referenztrajektorien, Robustheit gegenüber Modellungenauigkeiten und Sensorrauschen, Robustheit gegenüber Singularitäten, Flexibilität der Implementierung und Kombinierbarkeit unterschiedlicher Teil-Regler, sowie Kontaktstabilität.

Der Stand der Technik umfasst im Wesentlichen zwei verschiedene Methoden, welche diese Aufgabenstellung teilweise lösen: zum einen Inverse Dynamics-basierte Verfahren, zum anderen passivitäts- bzw. impedanz-basierte Verfahren. Beide im Stand der Technik enthaltenen Lösungsansätze haben gewisse bisher nicht überwundene Nachteile:

Inverse Dynamics ist nicht passiv, so dass in realen Einsatzszenarien schwerwiegende Stabilitätsprobleme auftreten können. Inverse Dynamics ist weiterhin nicht robust gegenüber Modellungenauigkeiten und Sensorrauschen, und außerdem anfällig gegenüber Singularitäten. Auch die Kontaktstabilität kann durch Inverse Dynamics-basierte Regelungsverfahren nicht immer gewährleistet werden.

Die aus dem Stand der Technik bekannten passivitäts- bzw. impedanz-basierten Verfahren weisen zumeist entweder ein schlechtes Tracking der gewünschten Referenztrajektorien oder eine Anfälligkeit gegenüber Singularitäten auf. Weiterhin ist die entsprechende Regler-Implementierung zumeist unflexibel und eine Kombination unterschiedlicher Teil-Regler bzw. Regler-Typen ist nicht vorgesehen.

Die vorliegende Erfindung beruht auf einem Verfahren zur Regelung von redundanten, drehmomentgeregelten Robotersystemen, in welchem passive bzw. impedanz-basierte Tracking Regler-Module durch eine Optimierung miteinander kombiniert werden. Durch eine spezielle Art der Gewichtung wird hierbei sichergestellt, dass durch die Kombination/Synthese der einzelnen Regler-Module die Passivität des Gesamtsystems nicht verloren geht bzw. dass durch die entsprechende Kombination/Synthese keine Aktivität, also eine entsprechende ungewollte Zunahme der Energie im System, bewirkt wird. Hierdurch werden sämtliche vorgenannten Vorteile erreicht und die entsprechenden Nachteile umgangen. Insbesondere stellt das der vorliegenden Erfindung zugrunde liegende Verfahren die Stabilität und Passivität des Gesamtsystems sicher bzw. fördert letztere im Falle, dass eine Stabilisierung bzw. Passivierung des Gesamtsystems technisch unmöglich ist, es erzielt präzises Tracking der gewünschten Referenztrajektorien, sofern diese nicht inkonsistent und somit technisch realisierbar sind, es ist robust gegenüber Singularitäten, Modellungenauigkeiten und Sensorrauschen, es zeichnet sich durch eine gute Kontaktstabilität aus, und es ermöglicht eine flexible Implementierung, in welcher unter anderem auch unterschiedliche Regler-Typen miteinander kombiniert werden können. Somit löst das der vorliegenden Erfindung zugrunde liegende Verfahren sämtliche hier adressierten Problemstellungen vollständig.

Nachfolgend werden Ausführungsbeispiele der Erfindung unter Bezugnahme auf Figuren näher beschrieben, dabei zeigen schematisch und beispielhaft:

Fig. 1 MPTC deckt den gesamten Bereich zwischen Inverse Dynamics (ID) und PD+ Regelung ab,

Fig. 2 Sprungantworten für ein voll bestimmtes, nicht widersprüchliches Task-Setup. Links: Gelenkwinkel und Referenzen. Rechts: gesamte und taskspezifische Lyapunov-Funktionswerte,

Fig. 3 Sprungantwort für überbestimmtes (und damit widersprüchliches) Task-Setup,

Fig. 4 der humanoide Roboter TORO geht in einer OpenHRP Simulation (Single- und Double-Support-Zeiten: TSS= 0.8s, TDS= 0.12s). Nach 2.5s wird der linke Fuß für 0.3s durch eine externe Kraft von -60N in x-Richtung gestört,

Fig. 5 TORO geht im Experiment (Single- und Double-Support-Zeiten: TSS= 0.9s, TDS= 0.3s, Schrittlänge 0.15m) und

Fig. 6 eine mögliche Anwendung des erfindungsgemäßen Verfahrens.

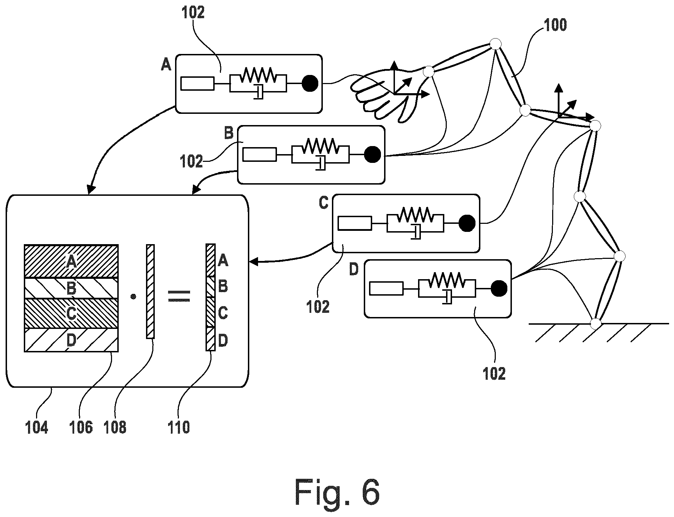

Fig. 6 zeigt exemplarisch eine mögliche Anwendung des erfindungsgemäßen Verfahrens auf. Hierbei werden mehrere impedanzbasierte Reglermodule 102 (Modulare Passive Tracking Controller) durch das erfindungsgemäße Verfahren in einen Gesamtregler 104 integriert. Im gezeigten Beispiel umfasst die Darstellung der Reglermodule 102 jeweils eine Referenztrajektorie und eine Masse, die über eine Feder-Dämpfer-System miteinander verbunden sind, wobei die Reglermodule 102 mit den Bezeichnungen A und C jeweils ein kartesisches Regelungs-Task darstellen, während die Reglermodule 102 mit den Bezeichnungen B und D als Gelenk-Regler formuliert sind. Wie in Fig. 6 gezeigt können die verschiedenen Reglermodule 102, welche jeweils aus einer Task-Mapping-Matrix und einem Task-Vektor bestehen, zu einem Stack of Tasks bestehend aus einer vereinigten Task-Mapping-Matrix 106 sowie aus einem kombinierten Task-Vektor 110 zusammengefasst werden. Durch ein geeignetes Optimierungsverfahren, beispielsweise mithilfe von Optimierungsvariablen 108, können die durch den Stack of Tasks repräsentierten Regler-Module zu einem Gesamtregler 104 fusioniert werden. Dabei wird ein optimaler Kompromiss aus den verschiedenen Unter-Regler-Zielsetzungen erzielt, wobei insbesondere die Passivität des resultierenden Gesamtreglers 104 bestmöglich umgesetzt wird.

Beschrieben wird eine Ausführung eines Modularen Passiven Tracking Controllers (MPTC) für "Stack of Tasks"-basierte Regler-Frameworks.

Abstract

Diese Arbeit führt den sogenannten Modularen Passiven Tracking Controller (MPTC) ein, welcher ein generischer passivitäts-basierter Regler ist, der darauf abzielt, die Ziele verschiedener Unteraufgaben (Subtasks) unabhängig voneinander zu erfüllen. Diese werden in einem Stack of Tasks (SoT) miteinander kombiniert, welcher als Basis für die Synthese eines Gesamtsystem-Reglers dient. Die entsprechende Analyse und das Regler-Design basieren auf Lyapunov-Theorie. Ein wichtiger Beitrag dieser Arbeit ist das Design einer spezifischen Optimierungs-Gewichtungs-Matrix, welche die Passivität eines überbestimmten und damit widersprüchlichen Task-Setups sicherstellt. Das vorgeschlagene Framework wird durch Simulationen und Experimente validiert, sowohl für fest montierte als auch für free-floating Roboter.

I. EINLEITUNG

Die simultane Regelung verschiedener Aufgaben hat sich zu einem bedeutenden Forschungsthema auf dem Gebiet der Roboterregelung entwickelt. Während anfängliche Arbeiten den einfacheren Fall einer einzigen Aufgabe und ihres Nullraumes für kinematisch redundante Roboter betrachteten, existieren heutzutage mehrere etablierte Frameworks zur Behandlung multipler Aufgaben mit und ohne Prioritäten. In der Literatur wird zwischen Arbeiten unterschieden, welche das Aufgaben-Koordinations-Problem zunächst auf *kinematischer Ebene* lösen, und Arbeiten, welche die Regelung *direkt für die Dynamik* formulieren. Eine weitere wichtige Klassifizierung kann basierend auf der Nutzung *strikter Aufgaben-Prioritäten* mittels hierarchischer Regler im Vergleich zu Reglern, welche eine *weiche Priorisierung* mittels Aufgabengewichtung anwenden, durchgeführt werden.

Im Bereich der *kinematischen Regelung* wurden hierarchische Regler vorgeschlagen, welche auf sukzessiven oder augmentierten Nullraum-Projektionen beruhen, um eine strikte Aufgaben-Hierarchie [18, 2] sicherzustellen. Zur Behandlung von Aufgaben-Singularitäten wurde eine singularitätsrobuste Inverskinematik vorgeschlagen [4]. Allerdings zerstört diese singularitätsrobuste Inverse die strikte Aufgaben-Hierarchie und generiert im Endeffekt eine Gewichtung zwischen den verschiedenen Aufgaben.

Andere Frameworks behandeln multiple Aufgaben auf der *Dynamik-Ebene.* Der Operational Space Ansatz wurde durch Anwendungen in der humanoiden Robotik [22, 23] in diese Richtung erweitert. Andere Inverse Dynamics (ID) basierte Regler benutzen hierarchische Quadratische Programme (QP) [20, 11, 3]. Die meisten dieser Arbeiten zielen auf eine strikte Aufgabenentkopplung ab.

Die vorliegende Arbeit ist inspiriert durch die Familie von Inverse Dynamics basierten Trackingreglern, welche mehrere Aufgaben (welche in einem Stack of Tasks (SoT) kombiniert werden) mithilfe eines einzigen gewichteten QP's [13, 15, 10] weich gegeneinander abwägen. Derartige Regler sind einfach zu schreiben und zeichnen sich durch ihre hohe Flexibilität aus. Diese Regler sind allerdings im Vergleich zu passivitäts-basierten Ansätzen wie beispielsweise [19, 5, 12, 16, 6] weniger robust gegenüber Modellierungsfehlern und Kontaktunsicherheiten [10, 6]. Dies bewirkt bei der Umsetzung auf realen Systemen Probleme wie beispielsweise Vibrationen, welche oft durch heuristische Ansätze adressiert werden [13, 10].

Des weiteren dienten der gewichtungsbasierte multi-objective Regler in [3] und der strikt hierarchische passivitätsbasierte Regler aus [6] als Inspiration für diese Arbeit. Ähnlich wie in [3] benutzen wir hier ein QP, um individuelle Regelziele aus unterschiedlichen Task-Space-Reglern zu kombinieren. In [3] wird allerdings jedes einzelne Regelziel basierend auf Inverse Dynamics mit der Einheitsmatrix als gewünschter Trägheit (Feedback Linearisierung) berechnet. Im Gegensatz dazu benutzen die individuellen Task-Regler, welche hier vorgestellt werden, das Konzept der Passivität und vermeiden eine Modifikation der Trägheit, das heißt, wir zielen auf ein PD+ artiges Closed-Loop-Verhalten für jede einzelne Task [19] ab. Im Vergleich zu [6], worin ebenfalls die natürliche Trägheit erhalten wird, benutzen wir eine gewichtete QP Formulierung (weiche Priorisierung), was uns erlaubt, eine beliebige Anzahl von verschiedenen Tasks miteinander zu kombinieren, und was weiterhin in gewissen Situationen (beispielsweise wenn eine einzelne Task singulär wird) zu einem weniger aggressiven Verhalten führt.

In dieser Arbeit leiten wir eine Regelungs-Architektur her, welche auf nominell passiven Subtask-Reglern basiert, den sogenannten Modularen Passiven Tracking Controllern (MPTC). Diese werden mit Hilfe eines Stack of Tasks miteinander kombiniert und gegeneinander aufgewogen, wobei der Stack of Tasks durch eine einzelne gewichtete Pseudo-Inverse oder ein entsprechendes QP gelöst wird. Das Regelungs-Framework kombiniert die Vorteile sowohl von Inverse Dynamics Reglern als auch von passivitäts-basierten Reglern, nämlich: Einfachheit der Implementierung und Anwendung, die Unterstützung von Task Space Tracking, Passivität und Kontakt-Robustheit, und die natürliche Bewältigung von Singularitäten. Die entsprechende Stabilitätsanalyse basiert auf Lyapunov-Theorie. Es zeigt sich, dass der Gesamt-Regler für den Fall, dass sich die Aufgaben nicht widersprechen, asymptotisch stabil und passiv ist. Ein wichtiger Beitrag der vorgestellten Arbeit ist die Herleitung eines spezifischen Optimierungs-Gewichtes, welches zusätzlich die *Passivität sogar im überbestimmten* (das heißt widersprüchlichen) *Fall erhält.* Für konkurrierende Tasks und entsprechende inkonsistente Task-Referenzen zeigen mehrere Simulationen die Stabilität und Robustheit von MPTC sogar im Tracking-Fall, wobei ein formaler Stabilitätsbeweis derzeit noch fehlt.

Das Paper ist folgendermaßen aufgebaut: Kapitel II leitet den Modularen Passiven Tracking Controller (MPTC) auf Task-Ebene her, während Kapitel III die entsprechende Analyse der Gesamt-Closed-Loop und die Regler-Herleitung vorstellt. Kapitel IV vergleicht MPTC mit Inverse Dynamics (ID) und PD+ basierten Reglern, und präsentiert eine große Auswahl an möglichen Ausprägungen der Entkopplung. Kapitel V präsentiert Simulationsergebnisse sowohl für fixed-base als auch für free-floating Roboter, während Kapitel VI das Paper beschließt.

## II. HERLEITUNG DES MODULAREN PASSIVEN TRACKING CONTROLLERS (MPTC)

Diese Arbeit betrachtet $n_T$ Aufgaben (Tasks), wobei jede davon ihr eigenes individuelles Ziel hat. Um die Ziele der einzelnen Tasks zu befriedigen, leitet dieses Kapitel Modulare Passive Tracking Controller (MPTC) her, welche in Kapitel III zu verschiedenen Gesamtreglern kombiniert werden.

### A. Allgemeines Robotermodell

Die allgemeine Bewegungsgleichung eines Roboters kann geschrieben werden als

$$M(q)\,\ddot{q} + C(q,\dot{q})\,\dot{q} + \tau_g(q) = \tau \quad , \tag{1}$$

wobei

$$q \in \mathbb{R}^n$$

die generalisierten Koordinaten[1] bezeichnet, $M(q)$, $C(q,\dot{q})$ und $\tau_g(q)$ kennzeichnen die Trägheitsmatrix, Coriolis- und Zentrifugal-Matrix, und die Gravitations-Drehmomente[2], und

$$\tau = S^T\left(\tau_j + \tau_{int}\right) + \underbrace{L_{all}^T\,w_{all}}_{\tau_{ext}} \tag{2}$$

bezeichnet die *generalisierten Kräfte.* Diese setzen sich einerseits aus Gelenks-Motordrehmomenten $\tau_j$ und internen Stördrehmomenten $\tau_{int}$, welche in den Robotergelenken wirken (z.B. Gelenkreibung), zusammen, welche beide über die Gelenks-Auswahl-Matrix $S$ [3] auf $\tau$ wirken, und andererseits aus externen Drehmomenten $\tau_{ext}$. Letztere setzen sich aus der Gesamtheit aller Wrenches (Kombination aus Kräften und Drehmomenten)

$$w_{all} = [w_1^T, ..., w_{n_L}^T]^T,$$

welche auf die $n_L$ Roboter-Glieder (Links) wirken, und über die gestapelten Link-Jacobians

$$L_{all} = [L_1^T, ..., L_{n_L}^T]^T$$

auf $\tau$ wirken. Während Kapitel III-E die einzelnen Elemente von (2) benutzt, werden wir im Folgenden einfach $\tau$ benutzen, um beliebige generalisierte Kräfte zu repräsentieren.

[1]Im Falle eines fixed-base Roboters bestehen diese einfach aus den Gelenk-Koordinaten $q_j$ (das heißt $q = q_j$), während

sie im Falle von free-floating Robotern (wie beispielsweise Humanoiden) zusätzlich die Roboter-Basis-Koordinaten $x_b$ enthalten (das heißt

$$q = [x_b^T, q_j^T]^T$$

).

[2]zu beachten: die Abhängigkeiten von $q$ und $\dot{q}$ werden im Folgenden vernachlässigt.

[3]Zu beachten: für fixed-base Roboter ist S eine Einheitsmatrix, während für free-floating Roboter

$$S = [0_{n_{act} \times 6}, I_{n_{act} \times n_{act}}]$$

gilt, wobei die Anzahl der aktuierten Robotergelenke bezeichnet.

Durch Auflösen von (1) nach den generalisierten Beschleunigungen 4 erhalten wir

$$\ddot{q} = M^{-1}\left(\tau - C\dot{q} - \tau_g\right) \quad . \tag{3}$$

*B. Task Space Größen*

*I) Task Space Geschwindigkeiten und Beschleunigungen:* In der Roboter-Regelung kann für typische Task Spaces[4] ein Task Geschwindigkeits-Vektor

$$\dot{x}_k = J_k\dot{q} \tag{4}$$

formuliert werden. Der Index $k$ zeigt an, dass ein solches Mapping für alle $n_T$ Tasks existiert, das heißt $k \in \{1,..,n_T\}$. Hierbei bezeichnet

$$J_k \in \mathbb{R}^{n_{T_k} \times n}$$

die entsprechende Task-Jacobian, mit der Dimensionalität $n_{T,k}$ der k-ten Task. Durch Ableiten von (4) bezüglich der Zeit und Einsetzen von (3) finden wir die Task Space Beschleunigung

$$\ddot{x}_k = \dot{J}_k\dot{q} + J_k\ddot{q} = J_k M^{-1}\left(\tau - \tau_g\right) - Q_k\dot{q} \quad , \tag{5}$$

wobei

$$Q_k = J_k M^{-1} C - \dot{J}_k \quad . \tag{6}$$

[4]Typische Tasks (Aufgaben) sind beispielsweise Gelenkregler und kartesische Endeffektor-Regler

Für das Design eines Tracking-Reglers (siehe Kapitel II-C) sind der entsprechende Task-Geschwindigkeitsfehler

$$\dot{\tilde{x}}_k = \dot{x}_{k,ref} - \underbrace{J_k\dot{q}}_{\dot{x}_k} \tag{7}$$

und der Task-Beschleunigungsfehler

$$\ddot{\tilde{x}}_k = \ddot{x}_{k,ref} - \underbrace{\left( J_k M^{-1} \left( \tau - \tau_g \right) - Q_k \dot{q} \right)}_{\ddot{x}_k} \tag{8}$$

von besonderem Interesse. Hierbei bezeichnen $\dot{x}_{k,ref}$ und $\ddot{x}_{k,ref}$ die Task-Referenzgeschwindigkeit und Task-Referenzbeschleunigung.

*2) Task Space Trägheit und ihre Ableitung:* Unter Verwendung von $J_k$ kann die Trägheitsmatrix $M$ in den Task Space [17] projiziert werden:

$$M_k = (J_k\ M^{-1}\ J_k^T)^{-1} \quad . \tag{9}$$

Ableiten von (9) ergibt

$$\dot{M}_k = -M_k \left( \dot{J}_k M^{-1} J_k^T - J_k M^{-1} \overbrace{\dot{M}}^{C+C^T} M^{-1} J_k^T \right.$$
$$\left. + J_k M^{-1} \dot{J}_k^T \right) M_k$$
$$= C_k + C_k^T \ , \tag{10}$$

mit der Task Space Coriolis- und Zentrifugal-Matrix

$$C_k = M_k\, Q_k\, T_k^T \quad . \tag{11}$$

Die Matrix

$$T_k = M_k\, J_k\, M^{-1} \tag{12}$$

bezeichnet die dynamisch konsistente Pseudo-Inverse von

$$J_k^T.$$

*C. Modularer Passiver Tracking Controller (MPTC)*

Dieses Kapitel leitet den vorgeschlagenen Modularen Passiven Tracking Controller (MPTC) her. Dieser wird in generischer Form geschrieben, wodurch er als Vorlage für beliebige spezifische Regler (wie beispielsweise kartesische oder Gelenk-Regler) dient. Für jede einzelne der $n_T$ Tasks benutzen wir eine *separate Lyapunov-Funktion* basierend auf der task-bezogenen relativen kinetischen Energie $E_{kin,k}$ und der relativen potentiellen Energie $E_{pot,k}$:

$$V_k = \underbrace{\frac{1}{2}\, \dot{\tilde{x}}_k^T\, M_k\, \dot{\tilde{x}}_k}_{E_{kin,k}} + \underbrace{\frac{1}{2}\, \tilde{x}_k^T\, K_k\, \tilde{x}_k}_{E_{pot,k}} \quad , \tag{13}$$

wobei die positiv definite, symmetrische Matrix $K_k$ die Task-Steifigkeit bezeichnet. Diese Lyapunov-Funktion ist positiv definit bezüglich Task-Positionsfehler $\tilde{x}_k$ und Task-Geschwindigkeitsfehler

$$\dot{\tilde{x}}_k.$$

Durch Ableiten von (13) und Einsetzen von (8) ergibt sich:

$$\dot{V}_k = \dot{\tilde{x}}_k^T \left( M_k \ddot{\tilde{x}}_k + \frac{\dot{M}_k}{2} \dot{\tilde{x}}_k + K_k \tilde{x}_k \right) \tag{14}$$

$$= \dot{\tilde{x}}_k^T \Big( \underbrace{M_k J_k M^{-1}}_{T_k} (\tau_g - \tau) + M_k Q_k \dot{q}$$

$$+ M_k \ddot{x}_{k,ref} + C_k \dot{\tilde{x}}_k + K_k \tilde{x}_k \Big) .$$

Hierbei wurde folgende Gleichung benutzt

$$\frac{\dot{M}_k}{2} = \frac{C_k^T + C_k}{2} = \underbrace{\frac{C_k^T - C_k}{2}}_{\text{skew-symmetric}} + C_k \, , \tag{15}$$

welche es uns erlaubt,

$$\dot{\tilde{x}}_k^T \frac{\dot{M}_k}{2} \dot{\tilde{x}}_k$$

als

$$\dot{\tilde{x}}_k^T C_k \dot{\tilde{x}}_k$$

umzuschreiben, da der schiefsymmetrische Term herausfällt.

Jetzt definieren wir die (tatsächliche) *Task-Kraft*[5] $f_k$ als:

$$f_k = T_k \tau \quad . \tag{16}$$

[5]Zu beachten: in Abhängigkeit von der Aufgabe kann die Task-Kraft lineare Kräfte, Drehmomente, Wrenches etc. enthalten.

Durch die Wahl der *gewünschten Task-Kraft*[6] $f_{k,des}$ als

$$f_{k,des} = T_k \tau_g + M_k Q_k \dot{q} + M_k \ddot{x}_{k,ref} + (C_k + D_k) \dot{\tilde{x}}_k + K_k \tilde{x}_k \tag{17}$$

und durch Umschreiben von $T_k \, \tau$ als

$$T_k \, \tau = f_k = f_{k,des} - \underbrace{(f_{k,des} - f_k)}_{\tilde{f}_k} \quad , \tag{18}$$

wird die Einzel-Task-Lyapunov-Rate aus (14) zu

$$\dot{V}_k = \underbrace{-\dot{\tilde{x}}_k^T D_k \dot{\tilde{x}}_k}_{\dot{V}_{k,des}, \ \text{purely dissipative}} + \underbrace{\dot{\tilde{x}}_k^T \tilde{f}_k}_{\dot{\tilde{V}}_k} \quad . \tag{19}$$

[6]Zu beachten: diese gewünschte Task-Kraft $f_{k,des}$ wird in Kapitel III als task-spezifisches Regler-Ziel verwendet werden. Ebenfalls zu beachten: In Kapitel IV-B, stellen wir eine alternative (jedoch äquivalente) Reglerformulierung (55) vor, welche die Ähnlichkeit des Reglers zu einer PD+ Formulierung leichter erkennen lässt.

Man beachte, dass das geregelte System (auf Task-Ebene) passiv bezüglich des Einganges $\tilde{f}_k$, des Ausganges

$$\dot{\tilde{x}}_k$$

und der Speicherfunktion $V_k$ aus (13) ist. Während die gewünschte Lyapunov-Rate $\dot{V}_{k,des}$ für eine positiv definite Dämpfungs-Matrix $D_k$ rein passiv ist, kann der Term

$$\dot{\tilde{V}}_k$$

ungleich Null sein, in Abhängigkeit von Faktoren wie unbekannte Störungen, Unteraktuierung und andere Aktuatorlimits, Task-Inkonsistenzen und Priorisierung. Schließlich multiplizieren wir (8) mit $M_k$ vor, setzen (18) und (17) ein, vereinfachen und stellen um, um die Task-Dynamik in folgender Form darzustellen

$$M_k \, \ddot{\tilde{x}}_k \, + \, \left( C_k + D_k \right) \dot{\tilde{x}}_k \, + \, K_k \, \tilde{x}_k \, = \, \tilde{f}_k \, . \tag{20}$$

Man beachte, dass der task-bezogene Coriolis-Term (das heißt

$$C_k \dot{\tilde{x}}_k$$

) nicht gekürzt wurde, was eine Voraussetzung für Passivität darstellt. Wenn die gewünschte Task-Kraft erreicht wird (das heißt $f_k = 0$) entspricht Gleichung (20) einer Feder-Masse-Dämpfer Dynamik für Task k. Im Falle von kompatiblen Tasks kann asymptotische Stabilität aller Trajektorien gezeigt werden. Dies kann beispielsweise erreicht werden, indem die $\varepsilon$-Methode [17] verwendet wird, um eine starke Lyapunov Funktion mit negativ definiter Zeitableitung, ähnlich wie in [6], zu erhalten.

Andernfalls, zum Beispiel im Falle von Unteraktuierung oder anderen Aktuator-Limits, unerwarteten externen Störungen oder widersprüchlichen Tasks, entspricht (20) einem Compliance[7] Verhalten [7]. Für solche Fälle können weiterführende Analysen notwendig werden. In dieser Arbeit konzentrieren wir uns auf das Problem der Task-Inkonsistenzen, welche in den folgenden Kapiteln adressiert werden.

[7]Zur Erinnerung: Compliance bedeutet ein Impedanz-Verhalten mit natürlicher Trägheit (keine Modifikation der Trägheit).

III. ANALYSE DES CLOSED-LOOP VERHALTENS DES GESAMTSYSTEMS UND GESAMT-REGLER

In diesem Kapitel leiten wir Regler für das Gesamtsystem, bestehend aus den Subtask-Reglern, her, das heißt für das komplette Set von gewünschten Task-Kräften $f_{k,des}$ aus (17) für $k \in \{1,..,n_T\}$, und wir analysieren deren Closed-Loop Verhalten durch die Anwendung der Lyapunov-Theorie.

*A. Definition von verschiedenen Task-Kraft-Fehlern*

Durch Kombination aller gewünschten Task-Kräfte $f_{k,des}$ aus (17) für $k \in \{1,..,n_T\}$ erhalten wir

$$f_{des} = \begin{bmatrix} f_{1,des} \\ \vdots \\ f_{n_T,des} \end{bmatrix} \, . \tag{21}$$

In ähnlicher Weise kombinieren wir auch (16) für alle $k \in \{1,..,n_T\}$ und erhalten

$$\underbrace{\begin{bmatrix} f_1 \\ \vdots \\ f_{n_T} \end{bmatrix}}_{f} = \underbrace{\begin{bmatrix} T_1 \\ \vdots \\ T_{n_T} \end{bmatrix}}_{T} \tau \, . \tag{22}$$

Dies stellt das Mapping der tatsächlichen generalisierten Kräfte $\tau$ auf den *Stack (Stapel) der tatsächlichen Task-Kräfte* über die entsprechende vereinigte Task-Mapping-Matrix

$$T \in \mathbb{R}^{n_{T,alt} \times n}$$

dar, wobei die Summe über alle Subtask-Dimensionalitäten durch

$$n_{T,alt} = \sum_{k=1}^{n_T} n_{T,k}$$

bezeichnet wird. Nun definieren wir den *Stack der tatsächlichen Task-Kraft Fehler*

$$\tilde{f} = f_{des} - f = f_{des} - T\tau \quad . \tag{23}$$

Um die Diskussion über *kommandierte Task-Kräfte* und entsprechende Fehler zu vereinfachen, evaluieren wir nun (22) für die *kommandierten* generalisierten Kräfte $\tau_{cmd}$, welche durch einen Regler[8] generiert werden, und erhalten

$$f_{cmd} = \begin{bmatrix} f_{1,cmd} \\ \vdots \\ f_{n_T,cmd} \end{bmatrix} = T\,\tau_{cmd} = \underbrace{T\,U}_{T_u}\,u_{cmd} \quad , \tag{24}$$

wobei $f_{cmd}$ den Stack der kommandierten Task-Kräfte darstellt. Für bestimmte Regelungs-Probleme (wie beispielsweise Unteraktuierung, siehe Kapitel III-E) kann $\tau_{cmd}$ aus den gegebenen Optimierungsvariablen $u_{cmd}$ resultieren, welche über die Aktuierungs-Mapping-Matrix $U$, also durch $\tau_{cmd} = U\,u_{cmd}$, auf die entsprechenden generalisierten Kräfte gemappt werden.

[8]Mögliche Regler können zum Beispiel pseudo-inversen basierte Optimierung wie in (36) für unbeschränkte Regelungsprobleme benutzen oder Quadratic Programming (QP) basierte Optimierung (siehe Kapitel III-E), um Ungleichungsbasierte Nebenbedingungen zu behandeln.

Indem wir (24) von (21) abziehen, erhalten wir schließlich den entsprechenden Stack der kommandierten Task-Kraft-Fehler:

$$\tilde{f}_{cmd} = f_{des} - f_{cmd} = f_{des} - T\,\tau_{cmd} = f_{des} - T_u\,u_{cmd} \quad . \tag{25}$$

*B. Definition einer Lyapunov-Funktion für das Gesamtsystem und deren tatsächliche und kommandierte Ableitungen*

In diesem Kapitel werden wir die Stabilität und Passivität von *kompletten Sets aus modularen Task-Space-Reglern* (und damit die Stabilität des robotischen Gesamtsystems, falls alle Roboterfreiheitsgrade durch die kombinierten Task-Koordinaten abgedeckt werden) analysieren. Hierfür kombinieren wir alle Einzel-Task Lyapunov-Funktionen (13), um die folgende Gesamt-Lyapunov-Funktion zu konstruieren

$$V = \sum_{k=1}^{n_T} \left( \psi_k\,V_k \right) \quad , \tag{26}$$

welche für positive skalare Gewichte[9] $\psi_k > 0$ positiv definit ist (genau wie ihre Eingangselemente $V_k$). In ähnlicher Weise erhalten wir die Gesamt-Lyapunov-Funktions-Ableitung V durch die Kombination der Lyapunov-Funktions-Ableitungen $\dot{V}_k$ der einzelnen Tasks aus (19):

$$\dot{V} = \sum_{k=1}^{n_T} \left( \psi_k\,\dot{V}_k \right) = \underbrace{\sum_{k=1}^{n_T} \left( \psi_k\,\dot{V}_{k,des} \right)}_{\dot{V}_{des}} + \underbrace{\sum_{k=1}^{n_T} \left( \psi_k\,\dot{\tilde{V}}_k \right)}_{\dot{\tilde{V}}} \quad . \tag{27}$$

[9]Zu beachten: Diese positiven skalaren Gewichte $\psi_k$ sind äquivalent zu den Optimierungsgewichten, welche in (34) bzw. (41) benutzt werden.

Der Term $\dot{V}_{des}$ ist negativ semi-definit falls alle $\psi_k > 0$, da alle gewünschten Task-Lyapunov-Funktions-Ableitungen $\dot{V}_{k,des}$ negativ semi-definit sind. Der *tatsächliche* Fehler

$$\dot{\tilde{V}}$$

der Gesamt-Lyapunov-Funktions-Ableitung kann folgendermaßen geschrieben werden

$$\dot{\tilde{V}} = \dot{\tilde{x}}^T \underbrace{\begin{bmatrix} \psi_1 I & \cdots & 0 \\ \vdots & \ddots & \vdots \\ 0 & \cdots & \psi_{n_T} I \end{bmatrix}}_{\Psi} \tilde{f} \quad , \tag{28}$$

wobei

$$\dot{\tilde{x}}^T = \left[ \dot{\tilde{x}}_1^T, ..., \dot{\tilde{x}}_{n_T}^T \right].$$

Man beachte, dass

$$\dot{\tilde{V}}$$

eine Funktion von $\tilde{f}$, und somit auch der tatsächlichen generalisierten Kräfte $\tau$, ist.

Wir werden nun zusätzlich die Auswirkung des Stacks der *kommandierten* Task-Kraft-Fehler $\tilde{f}_{cmd}$ untersuchen. Durch entsprechende Abpassung von (28) finden wir den *kommandierten* Fehler der Gesamt-Lyapunov-Funktions-Ableitung

$$\dot{\tilde{V}}_{cmd} = \dot{\tilde{x}}^T \Psi \tilde{f}_{cmd} \quad , \tag{29}$$

welcher der folgenden kommandierten Gesamt-Lyapunov-Funktions-Ableitung entspricht

$$\dot{V}_{cmd} = \dot{V}_{des} + \underbrace{\sum_{k=1}^{n_T} \left( \psi_k \, \dot{\tilde{V}}_{k,cmd} \right)}_{\dot{\tilde{V}}_{cmd}} \quad , \tag{30}$$

wobei

$$\dot{\tilde{V}}_{k,cmd} = \dot{\tilde{x}}_k^T \tilde{f}_{k,cmd}.$$

Schließlich formulieren wir (28) folgendermaßen um

$$\dot{\tilde{V}} = \dot{\tilde{x}}^T \Psi \left( \overbrace{f_{des} - f}^{\tilde{f}} \right) \tag{31}$$

$$= \underbrace{\dot{\tilde{x}}^T \Psi \left( \overbrace{f_{des} - f_{cmd}}^{\tilde{f}_{cmd}} \right)}_{\dot{\tilde{V}}_{cmd}} + \underbrace{\dot{\tilde{x}}^T \Psi \left( \overbrace{f_{cmd} - f}^{\tilde{f}_{real}} \right)}_{\dot{\tilde{V}}_{real}} \quad ,$$

was der *tatsächlichen Gesamt-Lyapunov-Funktions-Ableitung*

$$\dot{V} = \dot{V}_{des} + \dot{V}_{cmd} + \dot{V}_{real} \tag{32}$$

entspricht, welche sich auf das *reale* Systemverhalten bezieht. Hierbei bezeichnet

$$\dot{V}_{real} = \dot{\tilde{x}}^T \, \Psi \, \left( \overbrace{f_{cmd} - f}^{\tilde{f}_{real}} \right) \tag{33}$$

die Komponente des Fehlers der Lyapunov-Funktions-Ableitung, welche den Abweichungen $\tilde{f}_{real}$ der kommandierten Task-Kräfte $f_{cmd}$ von den tatsächlichen Task-Kräften $f$ entspricht.

*C. Kostenfunktion für das Gesamtsystem*

Basierend auf $\tilde{f}_{cmd}$ aus (25) formulieren wir die folgende Kostenfunktion für das Gesamtsystem

$$\begin{aligned} G &= \frac{1}{2} \tilde{f}_{cmd}^T \, W \, \tilde{f}_{cmd} \\ &= \frac{1}{2} \tau_{cmd}^T T^T W T \tau_{cmd} - f_{des}^T W T \tau_{cmd} + \frac{1}{2} f_{des}^T W f_{des} \\ &= \frac{1}{2} u_{cmd}^T T_u^T W T_u u_{cmd} - f_{des}^T W T_u u_{cmd} + \frac{1}{2} f_{des}^T W f_{des} \; . \end{aligned} \tag{34}$$

Hierbei bezeichnet $W$ eine beliebige symmetrische und positiv-definite Gewichtungsmatrix. Diese Kostenfunktion G wird durch die verschiedenen Regler, welche in den Kapiteln III-D und III-E präsentiert werden, minimiert.

*D. Unbeschränkter und voll aktuierter Fall*

*1) Pseudo-Inversen-basierte allgemeine analytische Optimierung:* In diesem Kapitel betrachten wir den voll aktuierten, unbeschränkten und potentiell widersprüchlichen Fall. Das Fehlen von ungleichungs-basierten Nebenbedingungen ermöglicht eine analytische Lösung durch gewichtete Pseudo-Inverse, wobei die volle Aktuierung die Regelbarkeit garantiert und es erlaubt, direkt die kommandierten generalisierten Kräfte $\tau_{cmd}$ als Optimierungsvariablen zu nutzen. In diesem Fall leiten wir G nach $\tau_{cmd}$ ab, um die Kostenfunktion (34, zweite Zeile) zu optimieren:

$$\frac{dG}{d\tau_{cmd}} = \tau_{cmd}^T \, T^T \, W \, T - f_{des}^T \, W \, T \quad . \tag{35}$$

Die Kostenfunktion (34) wird durch Null-Setzen von (35) und Auflösen nach den Regler-Kräften $\tau_{cmd}$ minimiert:

$$\tau_{cmd} = \left( T^T \, W \, T \right)^{-1} T^T \, W \, f_{des} \quad , \tag{36}$$

Dies sind die optimalen generlisierten Kraft-Kommandos für das gegebene Problem. Einsetzen von (36) in (25) ergibt

$$\tilde{f}_{cmd} = \underbrace{\left( I - T \left( T^T \, W \, T \right)^{-1} T^T \, W \right)}_{E_T} f_{des} \quad , \tag{37}$$

wobei $E_T$ die *Task-Kraft Ausgleichs-Matrix* bezeichnet.

*2) nicht-widersprüchlicher Fall:* Falls $T$ quadratisch und invertierbar ist (d.h. alle Sub-Tasks sind unabhängig voneinander und widersprechen einander nicht), wird die Ausgleichs-Matrix aus (37) zu $E_T = 0$ und die kommandierten Task-Kraft-Fehler werden zu $\tilde{f}_{cmd} = 0$. In diesem Fall wird

$$\tilde{\dot{V}}_{cmd}$$

aus (29) ebenfalls zu Null und somit wird $\dot{V}$ aus (32) zu

$$\dot{V} = \dot{V}_{des} + \tilde{\dot{V}}_{real} \ . \tag{38}$$

*3) Widersprüchlicher Fall:* Falls $T$ hingegen nicht invertierbar ist (z.B. im Falle von überbestimmten Regler-Setups), ist die Ausgleichsmatrix $E_T$ ungleich Null. Durch Einsetzen von (37) in (29) finden wir den entsprechenden kommandierten Fehler der Gesamt-Lyapunov-Funktions-Ableitung als

$$\tilde{\dot{V}}_{cmd} = (\dot{x}_{ref}^T - \dot{q}^T J^T) \, \Psi \, E_T \, f_{des} \ . \tag{39}$$

Hierbei bezeichnet

$$J = [J_1^T, ..., J_{n_r}^T]^T$$

den Stack der Einzel-Task-Jacobians.

Wir betrachten zunächst den *widersprüchlichen Regula-tions-Fall* (d.h. $\dot{x}_{ref} = 0$) und untersuchen die Matrix $J^T \Psi E_T$, welche in (39) erscheint:

$$\begin{aligned}
J^T \Psi E_T &= J^T \Psi \left( I - T \left( T^T W T \right)^{-1} T^T W \right) \\
&= J^T \Psi \left( I - \Lambda J \left( J^T \Lambda W \Lambda J \right)^{-1} J^T \Lambda W \right).
\end{aligned} \tag{40}$$

Hier haben wir $T = \Lambda J M^{-1}$ eingesetzt, wobei $\Lambda$ eine block-diagonale Matrix ist, welche die Task-Space-Trägheitsmatrizen $\{M_1, ..., M_{n_r}\}$ als diagonale Submatrizen enthält. Für eine beliebige Wahl von $W$[10] ist (40) ungleich Null, so dass

$$\tilde{\dot{V}}_{cmd}$$

aus (39) ungleich Null ist, sogar im Regulations-Fall. Wenn allerdings

$$W = \Lambda^{-1} \Psi \tag{41}$$

gewählt wird, wird (40) zu

$$J^T \Psi E_T = J^T \Psi - \underbrace{J^T \Psi \Lambda J \left( J^T \Psi \Lambda J \right)^{-1} J^T \Psi}_{I} = 0. \tag{42}$$

[10]sogar wenn $W$ als Diagonal-Matrix gewählt wird, wie dies oftmals in der Inverse Dynamics (ID) bezogenen Literatur zu finden ist.

Dies bedeutet, dass (unabhängig von den aktuellen generalisierten Geschwindigkeiten $\dot{q}$ und gewünschten Task-Kräften $f_{des}$) für die Wahl (41) die kommandierte Lyapunov-Funktions-Ableitung $\tilde{\dot{V}}_{cmd}$ aus (39) für den Regulations-Fall ($\dot{x}_{ref} = 0$) zu

$$\dot{V}_{cmd} = 0 \tag{43}$$

wird, und $\dot{V}$ aus (32) wird zu

$$\dot{V} = \dot{V}_{des} + \dot{V}_{real} \; . \tag{44}$$

Eine Analyse der Elemente von (44) ergibt, dass das geregelte Gesamtsystem passiv ist bezüglich des Einganges $\Psi \, \tilde{f}_{real}$, des Ausganges

$$\dot{\tilde{x}}$$

(wobei diese zwei die Elemente von

$$\dot{\tilde{V}}_{real}$$

darstellen) und der positiv-definiten Speicherfunktion $V$ aus (26). Entsprechend können wir auf Passivität des Gesamtsystems im hier untersuchten widersprüchlichen Regulations-Fall schließen. Für die Gesamtsystem-Closed-Loop-Dynamik von *überbestimmten / widersprüchlichen Task-Setups* (Regulations-Fall) fungiert (41) als passivitäts-garantierende Optimierungs-Gewichtung (PWOW). Man beachte, dass (43) nicht heißt, dass die Lyapunov-Funktions-Ableitungsfehler

$$\dot{\tilde{V}}_{k,cmd}$$

der Einzel-Tasks zu Null werden (nur ihre Summe).

Die Gesamt-Gewichtungs-Matrix $W = \Lambda^{-1}\Psi$ aus (41) ist symmetrisch und block-diagonal. Ihre Symmetrie-Eigenschaft resultiert aus der Symmetrie ihrer diagonalen Sub-Matrizen

$$W_k = \psi_k M_k^{-1} \; , \tag{45}$$

welche eine Funktion von $\psi_k$ und der Inversen der (symmetrischen) Task-Trägheitsmatrix $M_k$ sind. Beim Betrachten von (45) wird klar, dass jede Task durch ihren entsprechenden Gewichtungs-Skalar $\psi_k$ immer noch unabhängig (bezüglich der anderen Tasks) gewichtet werden kann.

Nun betrachten wir den *widersprüchlichen Tracking-Fall*. Für $\dot{x}_{ref} \neq 0$ und wenn nach wie vor (41) verwendet wird, wird (39) zu

$$\dot{\tilde{V}}_{cmd} = \dot{x}_{ref}^{T} \, \Psi \, E_T \, f_{des} \; , \tag{46}$$

wofür Gleichung (32) zu

$$\dot{V} = \dot{V}_{des} + \underbrace{\dot{x}_{ref}^{T} \, \Psi \, E_T \, f_{des}}_{\dot{\tilde{V}}_{cmd}} + \dot{V}_{real} \tag{47}$$

wird. Für *inkonsistente* Task-Referenzgeschwindigkeiten wird $\dot{\tilde{V}}_{cmd}$ typischerweise nicht zu Null, wodurch ein formaler Passivitätsbeweis für den Tracking-Fall erschwert wird (nicht Inhalt dieses Papers).

*E. Behandlung von Unteraktuierung und anderen Aktuierungsbeschränkungen*

Die im vorigen Kapitel präsentierten analytischen Lösungen sind für Regelungsprobleme bestimmt, welche von einem voll aktuierten Roboter ausgehen, dessen Aktuierungsbeschränkungen (oder andere Beschränkungen) nicht relevant sind. Dieses Kapitel wird die Fälle von Unteraktuierung und Aktuierungsbeschränkungen behandeln, und eine Lösung für solche Probleme im Kontext von MPTC vorschlagen.

*1) Unteraktuierung:* Im Gegensatz zu Fixed-Base-Robotern ist die Roboter-Basis von sogenannten Free-Floating-Robotern (z.B. Humanoiden) nicht aktuiert. Um ein gewisses Maß an Kontrollierbarkeit zu erlangen, muss ein Free-Floating-Roboter seine End-Effektoren benutzen, um Kontaktkräfte zu erzeugen, welche das Fehlen einer direkten Basis-Aktuierung kompensieren. Die entsprechende Aktuierungs-Mapping-Matrix $U$ aus Kapitel III-D hat die folgende Form:

$$U = [S^T, L_{EE}^T] \ . \tag{48}$$

Die entsprechenden Aktuierungs-Freiheitsgrade / Optimier-ungsvariablen sind

$$u_{cmd} = \begin{bmatrix} \tau_{j,cmd} \\ w_{EE,cmd} \end{bmatrix} \ , \tag{49}$$

wobei $\tau_{j,cmd}$ die kommandierten Gelenkdrehmomente bezeichnet und $w_{EE,cmd}$ die kommandierten End-Effektor-Kräfte sind. Die Gleichungen (48) und (49) basieren auf Elementen von Gleichung (2). Allerdings ist zu beachten, dass wir hier die kombinierten Link-Jabobians $L_{all}$ und Link-Kräfte $w_{all}$ durch eine entsprechende Auswahl ersetzt haben, die den End-Effektoren ("EE"), welche sich im Kontakt befinden können, entspricht, also durch $L_{EE}$ und $\omega_{EE,cmd}$.

*2) Kontakt-Zwangsbedingungen und Aktuierungsbeschränkungen:* Die gerade eingeführten kommandierten End-Effektor-Kräfte $\omega_{EE,cmd}$ unterliegen oftmals ungleichungs-basierten Beschränkungen (den sogenannten Kontakt-Zwangsbedingungen). Beispielsweise werden diese Kontakt-Zwangsbedingungen in Anwendungen, welche sich auf robotisches Gehen beziehen (siehe Kapitel V-B), typischerweise in Form von Unilateralitäts- und Reibkegel-Zwangsbedingungen ausgedrückt. Die Nichtberücksichtigung von solchen Kontakt-Zwangsbedingungen kann zu einem Versagen des Roboters führen. Aufgrund der physikalischen Beschränkungen des Roboters macht es oftmals Sinn, zusätzlich auch die kommandierten Gelenkdrehmomente $\tau_{j,cmd}$ zu beschränken. Auf diese Weise kann eine Aktuator-Saturierung vermieden werden.

*3) Lösung durch Quadratic Programming (QP):* Eine beliebte Methode, welche die Behandlung der genannten Probleme bezüglich Unteraktuierung, Aktuator-Beschränkungen und Kontakt-Zwangsbedingungen ermöglicht, besteht darin, ein Quadratisches Programm (QP) in folgender Form[11] aufzustellen

$$\underset{u_{cmd}}{\text{minimiere}} \quad G_{QP} = \frac{1}{2} u_{cmd}^T T_u^T W T_u u_{cmd} - f_{des}^T W T_u u_{cmd} \ ,$$
$$\text{unter Berücksichtigung von:} \tag{50}$$
$$\text{Kontakt- und Gelenkdrehmoments-Beschränkungen} \quad .$$

[11]Explizietere QP Formulierungen finden sich beispielsweise in [21, 15, 10].

Hierbei wurde die dritte Zeile von (34) für die Formulierung der QP Kostenfunktion $G_{QP}$ entsprechend angepasst. Es ist wohlbekannt, dass ein QP dieselbe Lösung wie eine gewichtete pseudo-inversen-basierte Optimierung erzielt, solange die Beschränkungen nicht aktiv sind. Wir empfehlen, dass die exakt selbe passivitäts-garantierende Optimierungs-Gewichtung (PWOW) verwendet wird, welche in Kapitel III-D für die analytische Optimierung einsetzt wurde, also $W = \Lambda^{-1} \Psi$. Man beachte allerdings, dass die Passivität, sobald die Beschränkungen aktiv werden, nicht mehr garantiert werden kann; nicht einmal für den Regulations-Fall.

## IV. EINORDNUNG im BEZUG AUF VERWANDTE REGLERTYPEN UND GRANULARITÄT DER ANGESTREBTEN ENTKOPPLUNG

### A. Vergleich von Inverse Dynamics (ID) und MPTC

In diesem Kapitel vergleichen wir die Zielsetzungen von Inverse Dynamics (ID) basierten Reglern und MPTC-basierten Reglern, und zeigen bedeutende Ähnlichkeiten auf.

**Inverse Dynamics (ID):**

Inverse Dynamics (ID) basierte Regler implementieren typischerweise eine stabile Dynamik zweiter Ordnung von folgender Form

$$\ddot{x}_k = \ddot{x}_{k,ref} + \hat{D}_{ID,k} \underbrace{(\dot{x}_{k,ref} - \dot{x}_k)}_{\dot{\tilde{x}}_k} + \hat{P}_{ID,k} \underbrace{(x_{k,ref} - x_k)}_{\tilde{x}_k} , \qquad (51)$$

welche für positiv definite Proportional- und Ableitungs-Verstärkungs-Matrizen $\hat{P}_{ID,k}$ und $\hat{D}_{ID,k}$ das Tracking der Referenztrajektorie $x_{k,ref}, \dot{x}_{k,ref}, \ddot{x}_{k,ref}$ ermöglicht. Die beiden Verstärkungs-Matrizen werden typischerweise als Diagonalmatrizen gewählt, um eine vollständig entkoppelte, lineare Dynamik zu erhalten. Oftmals wird hierbei das sogenannte Pole Placement [1] verwendet, um ein kritisch gedämpftes Einschwingverhalten zu erzielen. Durch Einsetzen der Task-Space-Beschleunigung $\ddot{x}_k$ aus (5) in (51) und Auflösen nach dem Term, welcher sich auf die generalisierten Kräfte $\tau$ bezieht, ergibt sich:

$$J_k M^{-1} \tau = J_k M^{-1} \tau_g + Q_k \dot{q}$$
$$+ \ddot{x}_{k,ref} + \hat{D}_{ID,k} \dot{\tilde{x}}_k + \hat{P}_{ID,k} \tilde{x}_k . \qquad (52)$$

Man beachte, dass wir hier nicht direkt nach $\tau$ auflösen, da abhängig vom gewählten Regler-Setup die Matrix $J_k$ in manchen Fällen nicht invertierbar ist.

**Modularer Passiver Tracking Controller (MPTC):**

Durch Ersetzen von $f_{k,des}$ in (17) durch $f_k = T_k \tau$ (aus (16)), Vormultiplizieren des Ergebnisses mit $M_k^{-1}$ und Auflösen finden wir die folgende gewünschte Task-Regler-Formulierung:

$$J_k M^{-1} \tau = J_k M^{-1} \tau_g + Q_k \dot{q}$$
$$+ \ddot{x}_{k,ref} + \underbrace{M_k^{-1}(C_k + D_k)}_{\hat{D}_{MPTC,k}} \dot{\tilde{x}}_k + \underbrace{M_k^{-1} K_k}_{\hat{P}_{MPTC,k}} \tilde{x}_k. \qquad (53)$$

Beim Vergleich von (53) und (52) zeigt sich, dass die Grundstruktur des vorgestellten Modularen Passiven Tracking Controllers (MPTC) und die von Inverse Dynamics (ID) basierten Reglern die selbe ist. Sie unterscheiden sich lediglich durch die gewählten Proportional- und Ableitungs-Verstärkungs-Matrizen. Für ID basierte Regler werden $\hat{P}_{ID,k}$ und $\hat{D}_{ID,k}$ als konstant gewählt, während im Falle von MPTC $\hat{P}_{MPTC,k}$ und $\hat{D}_{MPTC,k}$ jeweils eine Funktion der aktuellen Task-Trägheit $M_k$ sind. Zusätzlich enthält $\hat{D}_{MPTC,k}$ die Task-Coriolis-Matrix $C_k$, sodass die taskbezogenen Coriolis-Terme nicht gekürzt werden, was eine Voraussetzung für Passivität ist und die Robustheit erhöht[12].

[12] aufgrund der verringerten Anzahl an Feedback-Kanälen, welche Probleme im Bezug auf Sensorrauschen und Modellfehler bewirken können.

Ein wichtiger Aspekt hierbei ist, dass (52) und (53) hier im Task-*Beschleunigungs*-Space geschrieben sind, in welchem sich für ID konstante Verstärkungsmatrizen ergeben, welche konstanten System- bzw. Task-Eigenwerten entsprechen, während die lokalen Eigenwerte von MPTC konfigurationsabhängig sind. Wenn hingegen (52) und (53) durch Vormultiplizieren mit $M_k$ in den Task-Kraft-Space transferiert werden, zeigt sich, dass die gefühlte Dämpfung und Steifigkeit im Falle von MPTC konstant sind, während sie für ID konfigurationsabhängig sind.

**Anmerkung:** Die starke Ähnlichkeit von (52) und (53) kann sich vorteilhaft bezüglich einer möglichen Portierung von bestehenden ID-basierten Reglerframeworks in die MPTC Methodik auswirken.

*B. Vergleich mit PD+ Regelung / passivitäts-basierter Ganzkörperregelung*

Durch Neuanordnung der Terme in der Subtask-Regler-Zielsetzung (17), welche sich auf Coriolis- und Zentrifugal-Effekte (ab hier durch "CC" abgekürzt) beziehen, finden wir die folgende Gleichung:

$$C_k\,\dot{\tilde{x}}_k + M_k\,Q_k\,\dot{q} = C_k\,\dot{x}_{k,ref} + M_k\,Q_k\,\underbrace{\left(\underbrace{I - T_k^T\,J_k}_{N_k}\right)\,\dot{q}}_{B_k}\ . \tag{54}$$

Hier bezeichnet $N_k$ einen Nullraum-Projektor, welcher alle Komponenten von $\dot{q}$ entfernt, welche einen Effekt auf die Task-Space-Geschwindigkeit $\dot{x}_k$ haben würden, und die Matrix $B_k$ kombiniert die entsprechenden CC-bezogenen Feedback-Terme. Durch Einsetzen von (54) in (17) finden wir eine alternative (jedoch gleichwertige) Subtask-Regler-formulierung:

$$f_{k,des} = T_k\tau_g + B_k\dot{q} + M_k\ddot{x}_{k,ref} + C_k\dot{x}_{k,ref} + D_k\dot{\tilde{x}}_k + K_k\tilde{x}_k. \tag{55}$$

Im Vergleich zur ursprünglichen Subtask-Reglerformulierung aus (17) ermöglicht diese Formulierung einen direkteren Einblick in die CC-Term-Kürzungsstrategie des MPTC Reglers: MPTC kürzt alle *nicht-task-bezogenen CC-Feedbackterme* (vergleichbar mit den nicht-diagonalen Elementen in [7]) und generiert einen task-bezogenen Feedfor-ward-Term $C_k\dot{x}_{k,rej}$, während die task-bezogenen CC-Feedbackterme nicht gekürzt bzw. benutzt werden. Letzteres kann durch Betrachtung des nominellen Subtask-Closed-Loop-Verhaltens (20), in welchem die taskbezogenen CC-Terme unberührt bleiben, noch einmal verifiziert werden. Das Behalten der taskbezogenen CC-Terme ist eine Voraussetzung für Passivität und führt zu einer höheren Robustheit gegenüber Modellfehlern im Vergleich zu Inverse Dynamics basierten Reglern. Letztere *kürzen alle CC-Effekte* komplett (basierend auf dem potenziell ungenauen Robotermodell), während MPTC-basierte Regler nur die nicht-task-bezogenen CC-Terme kürzen.

Ein interessanter Spezialfall liegt vor, wenn nur eine einzige Task betrachtet wird (welche alle Subtasks durch Stapeln der entsprechenden Subtask-Jacobians in eine Gesamt-Task kombiniert) und die Task-Jacobian $J_k$ quadratisch und invertierbar ist.

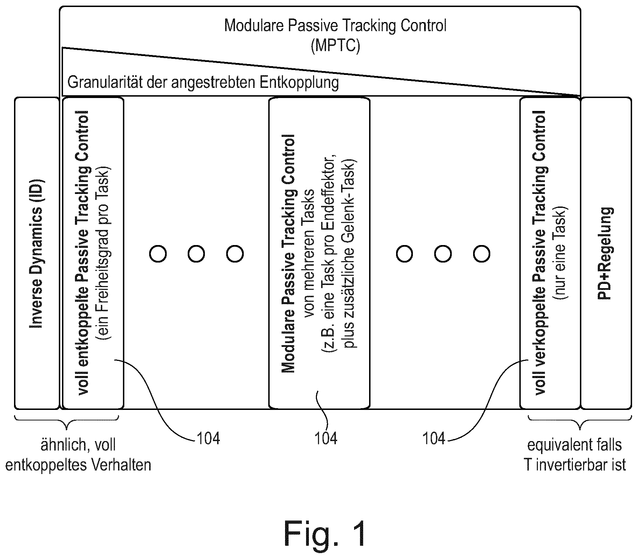

Voraussetzung hierfür ist, dass sich die Subtasks nicht widersprechen. In diesem speziellen Fall ist $B_k = 0$ und deshalb ist (55) äquivalent zu einem klassischen PD+ Regler [19] (siehe Abb. 1) oder (im Falle von Ungleichungs-Beschränkungen) zu den später eingeführten passivitätsbasierten Ganzkörperreglern (WBC) [12, 16].

*C. Granularität der angestrebten Entkopplung*

MPTC stellt ein generisches Reglerdesignwerkzeug dar, sowohl bezüglich der Wahl der Sub-Regler-Typen (z.B. kartesische oder Gelenk-Regler) als auch bezüglich der "Granularität" der angestrebten Entkopplung[13]. Wenn wir in diesem Paper von Subtasks sprachen, so hatten wir bisher nie deren Dimensionalität, d.h. die Anzahl an Freiheitsgraden, welche der jeweiligen Task zugeordnet sind, weiter spezifiziert. Das bedeutet, es existiert eine Vielzahl an vorstellbaren Reglerkonfigurationen. Wenn man verschiedene Regel-Ziele (z.B. ein kartesisches End-Effektor-Tracking-Ziel und ein Gelenkregelungs-Ziel) in einem einzigen Stack of Tasks (SoT, Aufgabenstapel) kombiniert, so bleibt vorerst die Frage offen, welcher Teil des SoT welcher MPTC-bezogenen Subtask zugeordnet wird. Als ein Beispiel: eine sechsdimensionale kartesische Task kann als zwei entkoppelte (linear und angular) Regelungs-Subtasks definiert werden, oder alternativ als eine einzige sechsdimensionale Task. Im ersten Fall wären die lineare und angulare Fehlerdynamik voneinander entkoppelt, während sie im zweiten Fall verkoppelt wären.

[13]Man beachte: wir sprechen hier über "angestrebte Entkopplung". Im Falle von konsistenten Tasks bewirkt MPTC eine strikt entkoppelte Fehlerdynamik Im Falle von Inkonsistenzen hingegen ist eine Verkopplung der entsprechenden Task-Fehlerdynamiken unvermeidbar (zumindest für weiche Taskpriorisierung).

Man kann sich außerdem dazu entscheiden, alle Reglerzielsetzungen in eine einzige Task zu kombinieren (was in einem *Voll Verkoppelten Passiven Tracking-Regler* (FC-PTC) resultiert), was unter bestimmten Umständen äquivalent zu einem PD+ Regler ist (siehe Kapitel IV-B und Abb. 1). Alternativ kann man ein Set von multiplen Tasks (z.B. eine Task für den linken Fuß, eine für den rechten) definieren, welches durch das Standard-MPTC-Framework behandelt werden kann. Schließlich kann man sich auch für ein maximal granuläres Regler-Setup entscheiden, in welchem jede Zeile des SoT eine eigene Task darstellt. Diesen speziellen Typ des Regler-Setups bezeichnen wir als Voll Entkoppelten Passiven Tracking Controller (FD-PTC). Von allen möglichen MPTC Setups ist FD-PTC dasjenige, welches einem Inverse Dynamics Regler am meisten ähnelt; Beide basieren auf ein-Freiheitsgrad entkoppelten Task-Dynamiken (siehe Abb. 1). Allerdings ist anzunehmen, dass FD-PTC eine höhere Robustheit aufweist, da hierbei die Trägheit nicht modifiziert wird und weniger CC-Terme gekürzt werden.

Wie bereits oben erwähnt weist jede Task nur einen einzigen Gewichtungs-Skalar $\psi_k$ auf, welcher es erlaubt, die Tasks (weich) gegeneinander zu priorisieren. Dies reduziert den nötigen Tuning-Aufwand. Es ist allerdings zu beachten, dass, um die Priorität einer bestimmten Task-Komponente zu erhöhen (z.B. wenn die z-Richtung den $x$ und $y$

Komponenten einer kartesischen Task vorgezogen werden soll), dieser eine *eigene Task* und eine geeignete Gewichtung (z.B. $\psi_z$) zugewiesen werden muss.

## V. SIMULATIONEN UND EXPERIMENTE

Um die Leistungsfähigkeit unseres vorgeschlagenen MPTC-Frameworks zu validieren, haben wir mehrere Simulationen durchgeführt: einerseits einfache Simulationen basierend auf einer Vorwärtsintegration von (3), die die berechneten Reglerdrehmomente als Eingabe verwendeten, andererseits Simulationen des humanoiden Roboters TORO [8] unter Verwendung von OpenHRP [14] als Simulationsumgebung.

### A. Fixed-base Roboter-Simulationen

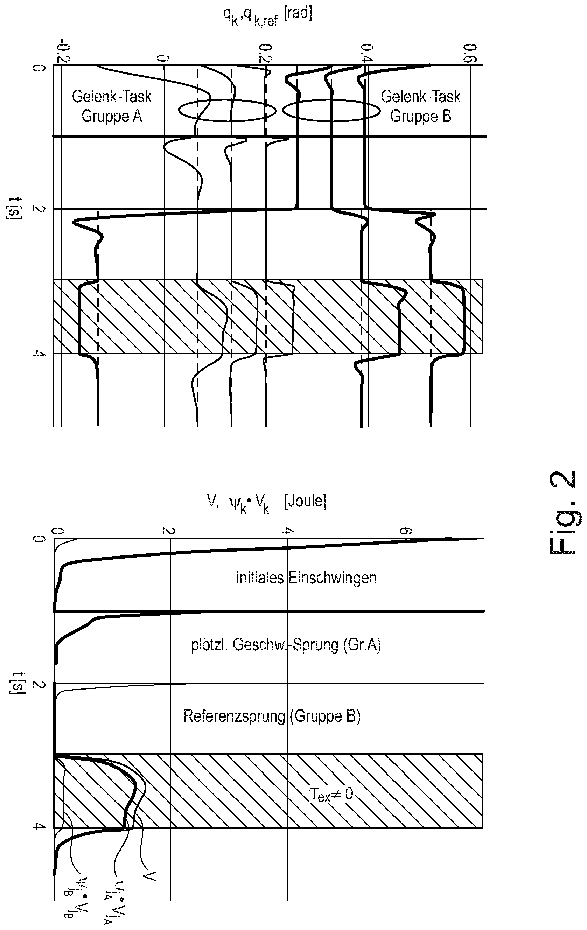

Die erste vorgestellte Simulation soll den Regulations-Fall für ein voll aktuiertes, vollständig bestimmtes und damit konfliktfreies Task-Setup untersuchen. Zu diesem Zweck wurden die sechs Gelenke eines fixed-base-Roboterarms (dessen Kinematik und Trägheitseigenschaften einem der Beine von TORO entsprechen) zwei verschiedenen Gelenkaufgaben A und B zugeordnet (welche jeweils drei Gelenke abdecken, siehe Abb. 2). Die entsprechenden Gelenk-Task-Steifigkeits- und -Dämpfungs-Gains[14] wurden als $K_A = 300I_{3\times3}$, $D_A = \text{diag}([40,20,10])$, $K_B = 40I_{3\times3}$ und $D_B = 2I_{3\times3}$ gewählt. Man beachte, dass die skalaren Aufgabengewichte $\psi_k$ (hier alle auf 1 gesetzt) keine Auswirkung haben, da aufgrund fehlender Konflikte alle Tasks ohnehin perfekt erfüllt wurden. Es ist zu beachten, dass der Controller kein zusätzliches Tuning benötigte. Die dargestellten Parameter wurden ausgewählt, um den didaktischen Wert von Abbildung 2 zu verbessern. Zu Beginn der Simulation konvergieren alle Gelenke schnell zu den anfänglichen Sollwerten. Nach einer Sekunde waren die Gelenke der Gruppe A einer Geschwindigkeitsänderung ausgesetzt, was zu einem Sprung in den entsprechenden Task-Fehler-Ableitungen führte. Man beachte, dass Gruppe B, während Gruppe A zurückkonvergiert, aufgrund der Task-Entkopplung völlig unberührt bleibt. Nach zwei Sekunden werden die Sollwerte der Gruppe B geändert. Auch hier konvergieren die entsprechenden Gelenkkoordinaten, während Gruppe A nun völlig unberührt bleibt. Hinweis: Die hier beobachtete perfekte Task-Entkopplung war nur aufgrund der Konsistenz der beiden Gelenk-Tasks erreichbar. Schließlich wird nach drei Sekunden ein Drehmoment-Offset von $\tau_{int} = [20,20,20,5,5,5]Nm$ zuerst angelegt und dann nach Sekunde 4 entfernt. Auch hier ist das beobachtete Controller-Verhalten gutmütig und erfüllt unsere Erwartungen. Mit dieser Simulation können wir verifizieren, dass der Gesamtwert der Lyapunov-Funktion $V$ immer abnimmt, außer im Falle von Störungen und Sollwertänderungen (siehe Abb. 2 (rechts)).

[14]Hinweis: Der Kürze halber werden hier die Einheiten für die Steifigkeit (linear: $\frac{N}{m}$, angulär: $\frac{Nm}{rad}$) und Dämpfung (linear: $\frac{Ns}{m}$, angulär: $\frac{Nms}{rad}$) weggelassen.

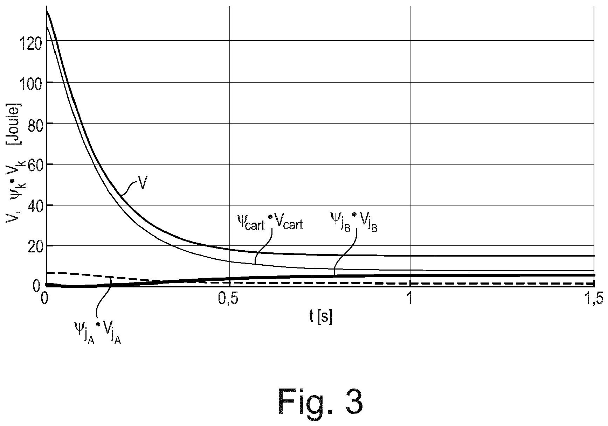

Die zweite vorgestellte Simulation evaluiert die Leistungsfähigkeit des Reglers für ein widersprüchliches Task-Setup, wiederum für den Regulations-Fall. Diesmal wurde eine kartesische Sechs-Freiheitsgrade-Endeffektor-Task mit einer Steifigkeit von $K_{cart} = diag([2000, 2000, 2000, 100, 100, 100])$ und einer Dämpfung von $D_{cart} = diag([500, 500, 500, 20, 20,20])$ zu den zuvor beschriebenen Gelenk-Tasks A und B hinzugefügt. Die skalaren Taskgewichte $\psi_k$ werden auf 1 gesetzt. Nach dem Starten des Reglers konvergiert der Roboter in eine Gleichgewichtsposition. Man beachte, dass der Gesamtwert der Lyapunov-Funktion $V$ monoton abnimmt, während die gewichteten Lyapunov-Funktionswerte der Sub-Tasks auch zunehmen können (wie z.B. $\psi_{js} \cdot V_{js}$ in Abb. 3).

### B. Humanoide Robotersimulationen und Experimente

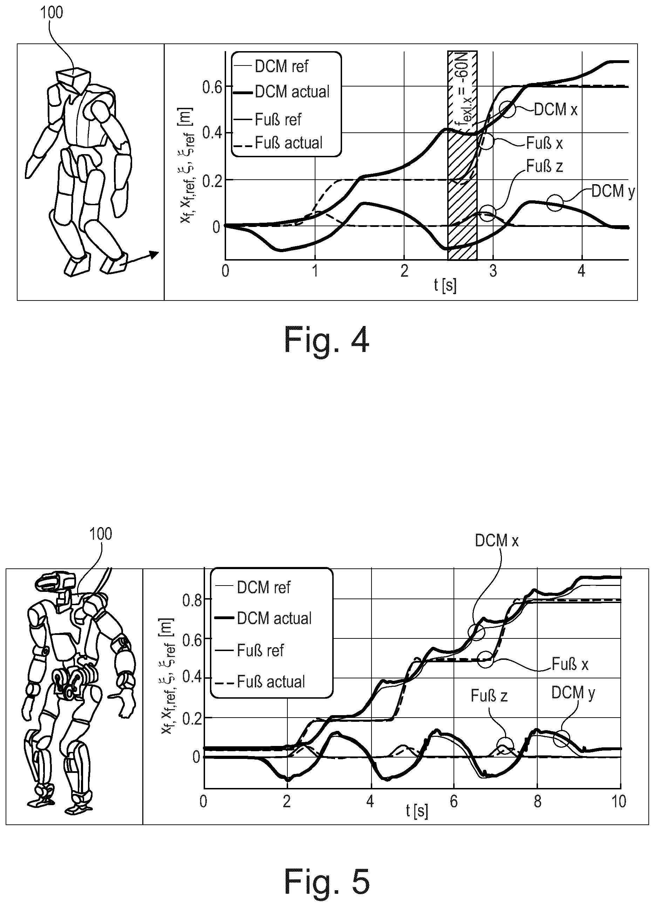

Schließlich führten wir Gang-Simulationen des humanoiden Roboters TORO durch (siehe Abb. 4), die auf einem hybriden WBC-Setup basierten: Inverse Dynamics-basierte Torso-Orientierungs- und Ganzkörper-Posen-Tasks, eine Task für die Regelung der Divergent Component of Motion (DCM) [9] und Regularisierung des Drehimpulses, sowie kartesische (6 Freiheitsgrade) MPTC-basierte Regler für das Fuß-Tracking wurden gemischt[15]. Die Fußreferenztrajektorien werden präzise getrackt. Nach 2.5s wird der linke Fuß durch eine Kraft von -60$N$ in $x$-Richtung für 0.3s gestört, was zu einem maximalen Fußpositionsfehler von 51$mm$ und einem maximalen DCM-Fehler von 45mm führt . Nachdem die Störung beseitigt ist, konvergiert der Fuß schnell genug, um erfolgreich weiterzugehen.

[15]Hinweis: Aufgrund der Modularität von MPTC können ID-basierte und MPTC-basierte Aufgaben im selben Ganzkörperregelungs-Setup kombiniert werden.

Um die Leisungsfähigkeit von MPTC unter realen Bedingungen zu bewerten, haben wir mehrere Experimente mit TORO durchgeführt, darunter Push Recovery (stehend), Mensch-Roboter-Interaktion und Gehen (ein entsprechendes Video findet sich hier: https://youtu.be/WdF9UQK8alo). Hier präsentieren wir ein Gangexperiment, bei dem TORO sechs Schritte vorwärts läuft (siehe Abb. 5 für Details). *Separate* MPTC-basierte Controller wurden zur Regelung der Füße (kartesisches Sechs-Freiheitsgrade-Tracking), des Rumpfes (Drei-Freiheitsgrade-Rotations-Tracking), der Beingelenke, des Taillengelenks und der Oberkörpergelenke verwendet (die letzten drei dienten zur Regelung der Gesamtkörperpose und als Regularisierungs-Tasks). Genau wie für die Simulationen wurden zusätzlich ein DCM-basierter Regler und ein Drehimpuls-Regularisierungsregler angewendet. Die Gang-Performance war insgesamt robust. Es können jedoch Trackingfehler beobachtet werden, die unserer Ansicht nach durch Drehmoment-Offsets und Gelenkreibung verursacht werden. Im Vergleich zu ID-basierten Reglern [10] war der Tuning-Aufwand gering, was die Robustheit von MPTC beim Einsatz unter realen Bedingungen belegt.

VI. ZUSAMMENFASSUNG UND AUSBLICK

In dieser Arbeit wurde der sogenannte Modulare Passive Tracking Controller (MPTC) eingeführt. Dieser generische Regler beabsichtigt in einem ersten Schritt, mehrere Subtask-Zielsetzungen unabhängig voneinander zu erfüllen. Diese primär unabhängigen Subtask-Regler werden dann zu einem Gesamtregler zusammengeführt. Das Design und die Analyse des Reglers basieren auf der Lyapunov-Theorie, welche Aussagen über Stabilität und Passivität erleichtert. Einer der Hauptbeiträge dieses Papers ist der Entwurf einer Optimierungsgewichtungsmatrix, die für voll-aktuierte Roboter die Passivität eines kompletten Sets von widersprüchlichen Subtasks garantiert. Das vorgeschlagene Regelungs-Framework wurde in mehreren Simulationen und Experimenten für fixed-base und free-floating Roboter validiert.

In unserer zukünftigen Forschung wollen wir die Regelungskonzepte von Inverse Dynamics (ID), des vorgeschlagenen Modularen Passiven Tracking Controllers (MPTC) und von anderen passivitätsbasierten Reglern, wie etwa dem PD+ Regler, ausführlich vergleichen. Dieser umfassende Vergleich wird auf theoretischen Analysen, Simulationen und Hardwareexperimenten basieren.

REFERENCES

[1] J. Ackermann. Parameter space design of robust control systems. IEEE Transactions on Automatic Control, 25(6):1058-1072, December 1980. ISSN 2334-3303. doi: 10.1109/TAC.1980.1102505.

[2] G. Antonelli. Stability Analysis for Prioritized closed-loop inverse kinematic algorithms for redundant robotic systems. IEEE Transactions on Robotics, 25(5):985-994, 2009.

[3] K. Bouyarmane and A. Kheddar. On Weight-Prioritized multitask control of humanoid robots. IEEE Transactions on Automatic Control, 63(6):1632-1647, June 2018. ISSN 2334-3303. doi: 10.1109/TAC.2017.2752085.

[4] S. Chiaverini. Singularity-robust task-priority redundancy resolution for real-time kinematic control of robot manipulators. IEEE Transactions on Robotics and Automation, 13(3):398-410, June 1997. ISSN 2374-958X. doi: 10.1109/70.585902.

[5] A. Dietrich. Whole-Body Impedance Control of Wheeled Humanoid Robots, volume 116. Springer International Publishing, 2016. ISBN 978-3-319-40557-5.

[6] A. Dietrich and C. Ott. Hierarchical Impedance-Based tracking control of kinematically redundant robots. IEEE Transactions on Robotics, 36(1):204-221, 2020. ISSN 1941-0468. doi: 10.1109/TRO.2019.2945876.

[7] A. Dietrich, C. Ott, and A. Albu-Schäffer. Multi-objective compliance control of redundant manipulators: hierarchy, control, and stability. In IEEE/RSJ Int. Conf. on Intelligent Robots and Systems, pages 3043-3050, Nov 2013. doi: 10.1109/IROS.2013.6696787.

[8] J. Englsberger, A. Werner, C. Ott, B. Henze, M. A. Roa, G. Garofalo, R. Burger, A. Beyer, O. Eiberger, K. Schmid, and A. Albu-Schäffer. Overview of the torque-controlled humanoid robot TORO. In IEEE-RAS Int. Conf. on Humanoid Robots, pages 916-923, Nov 2014. doi: 10.1109/HUMANOIDS.2014.7041473.

[9] J. Englsberger, C. Ott, and A. Albu-Schäffer. Three-Dimensional Bipedal Walking Control Based on divergent component of motion. IEEE Transactions on Robotics, 31(2):355-368, April 2015. ISSN 1941-0468. doi: 10.1109/TRO.2015. 2405592.

[10] J. Englsberger, G. Mesesan, A. Werner, and C. Ott. Torque-Based Dynamic Walking - a long way from simulation to experiment. In IEEE Int. Conf. on Robotics and Automation (ICRA), pages 440-447, 2018.

[11] Adrien Escande, Nicolas Mansard, and Pierre-Brice Wieber. Hierarchical quadratic programming: fast online humanoidrobot motion generation. The International Journal of Robotics Research, 33(7):1006-1028, 2014. doi: 10.1177/ 0278364914521306.

[12] B. Henze, M. A. Roa, and Ch. Ott. Passivity-based whole-body balancing for torque-controlled humanoid robots in multi-contact scenarios. The International Journal of Robotics Research, 35(12):1522-1543, 2016. doi: 10.1177/ 0278364916653815.

[13] M. A. Hopkins, D. W. Hong, and A. Leonessa. Compliant locomotion using whole-body control and divergent component of motion tracking. In IEEE Int. Conf. on Robotics and Automation (ICRA), pages 5726-5733, May 2015.

doi: 10.1109/ ICRA.2015.7140001.

[14] F. Kanehiro, H. Hirukawa, and S. Kajita. Openhrp: Open Architecture Humanoid Robotics Platform. The International Journal of Robotics Research, 23(2):155-165, 2004. doi: 10.1177/0278364904041324.

[15] T . Koolen, S. Bertrand, G. Thomas, T. de Boer, T. Wu, J. Smith, J. Englsberger, and J. Pratt. Design of a Momentum-Based Control Framework and application to the humanoid robot atlas. International Journal of Humanoid Robotics, 13(01):1650007, 2016. doi: 10.1142/50219843616500079.

[16] G. Mesesan, J. Englsberger, G. Garofalo, C. Ott, and A. Albu-Schäffer. Dynamic walking on compliant and uneven terrain using dem and passivity-based whole-body control. In IEEE-RAS 19th Int. Conf. on Humanoid Robots (Humanoids), pages 25-32, 2019.

[17] R. M. Murray. A mathematical introduction to robotic manipulation. CRC press, 2017.

[18] Y. Nakamura, H. Hanafusa, and T. Yoshikawa. Task- priority based redundancy control of robot manipulators. The International Journal of Robotics Research, 6(2):3-15, 1987. doi: 10.1177/027836498700600201.

[19] B. Paden and B. Riedle. A Positive-Real Modification of a dass of nonlinear controllers for robot manipulators. In 1988 American Control Conference, pages 1782-1785, June 1988. doi: 10.23919/ACC.1988.4790015.

[20] J. Peters, M. Mistry, F. Udwadia, J. Nakanishi, and S. Schaal. A unifying framework for robot control with redundant dofs. Autonomous Robots, 24:1-12, 2008. doi: 10.1007/s10514-007-9051-x.

[21] L. Righetti, J. Buchli, M. Mistry, and S. Schaal. Inverse dynamics control of floating-base robots with external constraints: A unified view. In IEEE Int. Conf. on Robotics and Automation, pages 1085-1090, May 2011. doi: 10.1109/ICRA.2011. 5980156.

[22] L. Sentis and O. Khatib. Synthesis of Whole-Body behaviors through hierarchical control of behavioral primitives. International Journal of Humanoid Robotics, 2(4):505-518, 2005.

[23] L. Sentis, J. Park, and O. Khatib. Compliant Control of multicontact and center-of-mass behaviors in humanoid robots. IEEE Transactions on Robotics, 26(3):483-501, 2010.

Bezugszeichen

100    Roboter
102    Reglermodul
104    Gesamtregler
106    Task-Mapping-Matrix
108    Optimierungsvariablen
110    Task-Vektor

**Patentansprüche**

1. Verfahren zum Regeln eines kinematisch redundanten Roboters (100), um mehrere Tasks zu erfüllen, wobei wenigstens ein passivitäts-basiertes erstes Reglermodul (102) verwendet wird, für das wenigstens eine erste Reglermodul (102) wenigstens eine Task-Zielbeschreibung und wenigstens ein zugehöriges Task-Mapping berechnet werden, für die Tasks wenigstens eine Gewichtung in Form einer task-spezifischen symmetrischen Matrix

$$W_k = \Psi_k \, M_k^{-1}$$ berechnet wird, wobei sich die Matrix $W_k$ aus der Inversen der Task-Trägheitsmatrix $M_k$, wobei $M_k = (J_k M^{-1} J_k T)^{-1}$, $J_k$ die Task-Jacobian und $M$ die Trägheitsmatrix des dynamischen Modells des Roboters ist, und einem Gewichtungs-Skalar $\Psi_k$ zur unabhängigen Gewichtung verschiedener Tasks untereinander zusammensetzt, und das wenigstens eine erste Reglermodul (102) unter Verwendung der wenigstens einen Task-Gewichtungs-Matrix $W_k$, welche in Form von Sub-Matrizen in eine symmetrische und block-diagonale Gesamt-Gewichtungs-Matrix $W$ zusammengeführt wird, in einen Gesamtregler (104) integriert wird.

2. Verfahren nach Anspruch 1, **dadurch gekennzeichnet, dass** die wenigstens eine Task-Zielbeschreibung und das wenigstens eine zugehörige Task-Mapping derart berechnet werden, dass ein nominelles Verhalten des wenigstens einen ersten Reglermoduls (102) dem Verhalten eines Feder-Masse-Dämpfer-Systems entspricht.

3. Verfahren nach wenigstens einem der vorhergehenden Ansprüche, **dadurch gekennzeichnet, dass** die wenigstens eine Task-Zielbeschreibung und das wenigstens eine zugehörige Task-Mapping basierend auf einer natürlichen Roboter-Trägheit berechnet werden.

**4.** Verfahren nach wenigstens einem der vorhergehenden Ansprüche, **dadurch gekennzeichnet, dass** die wenigstens eine Task-Zielbeschreibung und das wenigstens eine zugehörige Task-Mapping derart berechnet werden, dass taskspezifische Coriolis- und Zentrifugal-Effekte ungeändert bleiben, während alle übrigen Coriolis- und Zentrifugal-Effekte kompensiert werden.

**5.** Verfahren nach wenigstens einem der vorhergehenden Ansprüche, **dadurch gekennzeichnet, dass** die wenigstens eine Task-Zielbeschreibung als Task-Vektor und/oder das wenigstens eine zugehörige Task-Mapping als Task-Mapping-Matrix berechnet werden/wird.

**6.** Verfahren nach wenigstens einem der vorhergehenden Ansprüche, **dadurch gekennzeichnet, dass** wenigstens ein weiteres Reglermodul in den Gesamtregler (104) integriert wird.

**7.** Verfahren nach wenigstens einem der vorhergehenden Ansprüche, **dadurch gekennzeichnet, dass** wenigstens ein als Zwangsbedingung formuliertes weiteres Reglermodul in den Gesamtregler (104) integriert wird.

**8.** Verfahren nach wenigstens einem der Ansprüche 6 bis 7, **dadurch gekennzeichnet, dass** das wenigstens eine weitere Reglermodul gewichtet wird.

**9.** Verfahren nach wenigstens einem der vorhergehenden Ansprüche, **dadurch gekennzeichnet, dass** das wenigstens eine erste Reglermodul (102) und/oder das wenigstens eine weitere Reglermodul derart gewichtet werden, dass der Gesamtregler (104) auch bei einem überbestimmten Regelungsproblem ein zumindest annähernd passives Verhalten aufweist.

**10.** Verfahren nach wenigstens einem der vorhergehenden Ansprüche, **dadurch gekennzeichnet, dass** das wenigstens eine erste Reglermodul (102) und/oder das wenigstens eine weitere Reglermodul mithilfe wenigstens einer Pseudo-Inversen und/oder wenigstens einer Inversen optimiert werden/wird.

**11.** Verfahren nach wenigstens einem der vorhergehenden Ansprüche, **dadurch gekennzeichnet, dass** das wenigstens eine erste Reglermodul (102) und/oder das wenigstens eine weitere Reglermodul quadratisch optimiert werden/wird.

**12.** Verfahren nach wenigstens einem der vorhergehenden Ansprüche, **dadurch gekennzeichnet, dass** wenigstens eines der Reglermodule (102) als Tracking-Regler ausgeführt wird.

**13.** Verfahren nach wenigstens einem der vorhergehenden Ansprüche, **dadurch gekennzeichnet, dass** wenigstens eines der Reglermodule (102) als Regulation-Regler ausgeführt wird.

**14.** Verfahren nach wenigstens einem der vorhergehenden Ansprüche, **dadurch gekennzeichnet, dass** jedem regelbaren Freiheitsgrad ein gesondertes Reglermodul (102) zugeordnet wird.

**15.** Computerprogrammprodukt, umfassend Befehle, die bei der Ausführung des Programms mithilfe wenigstens eines Prozessors diesen veranlassen, das Verfahren nach wenigstens einem der Ansprüche 1 bis 14 auszuführen.

**Claims**

**1.** Method for controlling a kinematically redundant robot (100) in order to fulfil a plurality of tasks, wherein at least one passivity-based first controller module (102) is used, at least one task target description and at least one associated task mapping are calculated for the at least one first controller module (102), at least one weighting is calculated for the tasks in the form of a task-specific symmetrical matrix $W_k = \Psi_k M_k^{-1}$ is calculated, wherein the matrix $W_k$ is composed of the inverse of the task inertia matrix $M_k$, where $M_k = (J_k M^{-1} J_k T)^{-1}$, $J_k$ is the task Jacobian and $M$ is the inertia matrix of the dynamic model of the robot, and a weighting scalar $\Psi_k$ for independently weighting different tasks with respect to each other, and the at least one first controller module (102) using the at least one task weighting matrix $W_k$, which is combined in the form of sub-matrices into a symmetrical and block-diagonal overall weighting matrix $W$, is integrated into an overall controller (104).

**2.** Method according to claim 1**characterised in that** the at least one task target description and the at least one associated task mapping are calculated in such a way that a nominal behaviour of the at least one first controller module (102) corresponds to the behaviour of a spring-mass-damper system.

**3.** Method according to at least one of the preceding claims, **characterised in that** the at least one task target description and the at least one associated task mapping are calculated based on a natural robot inertia.

**4.** Method according to at least one of the preceding claims, **characterised in that** the at least one task target description and the at least one associated task mapping are calculated in such a way that task-specific Coriolis and centrifugal effects remain unchanged, while all other Coriolis and centrifugal effects are compensated for.

**5.** Method according to at least one of the preceding claims, **characterised in that** the at least one task target description is/is calculated as a task vector and/or the at least one associated task mapping is/is calculated as a task mapping matrix.

**6.** Method according to at least one of the preceding claims, **characterised in that** at least one further controller module is integrated into the overall controller (104).

**7.** Method according to at least one of the preceding claims, **characterised in that** at least one further controller module formulated as a constraint condition is integrated into the overall controller (104).

**8.** Method according to at least one of claims 6 to 7, **characterised in that** the at least one further controller module is weighted.

**9.** Method according to at least one of the preceding claims, **characterised in that** the at least one first controller module (102) and/or the at least one further controller module are weighted in such a way that the overall controller (104) exhibits at least approximately passive behaviour even in the case of an overdetermined control problem.

**10.** Method according to at least one of the preceding claims, **characterised in that** the at least one first controller module (102) and/or the at least one further controller module is/are optimised with the aid of at least one pseudo-inverse and/or at least one inverse.

**11.** Method according to at least one of the preceding claims, **characterised in that** the at least one first controller module (102) and/or the at least one further controller module is/are optimised quadratically.

**12.** Method according to at least one of the preceding claims, **characterised in that** at least one of the controller modules (102) is implemented as a tracking controller.

**13.** Method according to at least one of the preceding claims, **characterised in that** at least one of the controller modules (102) is designed as a regulation controller.

**14.** Method according to at least one of the preceding claims, **characterised in that** a separate controller module (102) is assigned to each controllable degree of freedom.

**15.** A computer programme product comprising instructions which, when the programme is executed using at least one processor, cause the processor to execute the method according to at least one of claims 1 to 14.

**Revendications**

**1.** Procédé de commande d'un robot cinématiquement redondant (100) afin d'accomplir plusieurs tâches, dans lequel on utilise au moins un premier module de régulation (102) basé sur la passivité, on calcule pour le au moins un premier module de régulation (102) au moins une description d'objectif de tâche et au moins une cartographie de tâche associée, on calcule pour les tâches au moins une pondération sous la forme d'une matrice symétrique $W_k$

$$= \Psi_k M_k^{-1}$$

spécifique à la tâche, la matrice $W_k$ se composant de l'inverse de la matrice d'inertie de tâche $M$, où

$M_k = (J_k M^{-1} J_k T)^{-1}$ est le jacobien de tâche et $M$ la matrice d'inertie du modèle dynamique du robot, et d'un barème de pondération $\Psi_k$. pour la pondération indépendante de différentes tâches entre elles, et l'au moins un premier module de régulateur (102) étant intégré dans un régulateur global (104) en utilisant l'au moins une matrice de pondération de tâche $W_k$, qui est combinée sous la forme de sous-matrices en une matrice de pondération globale symétrique et bloc-diagonale $W$ est intégré dans un contrôleur global (104).

2. Procédé selon la revendication 1, **caractérisé par le fait que** l'au moins une description de cible de tâche et l'au moins une cartographie de tâche associée sont calculées de manière à ce qu'un comportement nominal de l'au moins un premier module de commande (102) corresponde au comportement d'un système ressort-masse-amortisseur.

3. Procédé selon au moins l'une des revendications précédentes, **caractérisé par le fait que** l'au moins une description de la cible de la tâche et l'au moins une cartographie de la tâche associée sont calculées sur la base de l'inertie naturelle du robot.

4. Procédé selon au moins l'une des revendications précédentes, **caractérisé par le fait que** l'au moins une description de la cible de la tâche et l'au moins une cartographie de la tâche associée sont calculées de manière à ce que les effets de Coriolis et de centrifugation spécifiques à la tâche restent inchangés, tandis que tous les autres effets de Coriolis et de centrifugation sont compensés.

5. Procédé selon au moins l'une des revendications précédentes, **caractérisée par le fait que** la description de l'objectif de la tâche au moins est calculée comme un vecteur de tâche et/ou que la cartographie de la tâche associée au moins est calculée comme une matrice de cartographie de la tâche.

6. Procédé selon au moins l'une des revendications précédentes, **caractérisé par le fait qu'**au moins un autre module de commande est intégré dans la commande globale (104).

7. Procédé selon au moins l'une des revendications précédentes, **caractérisée par le fait qu'**au moins un autre module de commande formulé comme une condition de contrainte est intégré dans la commande globale (104).

8. Procédé selon l'une au moins des revendications 6 à 7, **caractérisé par le fait que** l'au moins un autre module de commande est pondéré.

9. Procédé selon au moins l'une des revendications précédentes, **caractérisé par le fait que** le au moins un premier module de commande (102) et/ou le au moins un autre module de commande sont pondérés de telle sorte que la commande globale (104) présente un comportement au moins approximativement passif, même dans le cas d'un problème de commande surdéterminé.

10. Procédé selon au moins l'une des revendications précédentes, **caractérisé par le fait que** le au moins un premier module de commande (102) et/ou le au moins un autre module de commande est/sont optimisé(s) à l'aide d'au moins un pseudo-inverse et/ou d'au moins un inverse.

11. Procédé selon au moins l'une des revendications précédentes, **caractérisé par le fait que** le au moins un premier module de commande (102) et/ou le au moins un autre module de commande est/sont optimisé(s) de manière quadratique.

12. Procédé selon au moins l'une des revendications précédentes, **caractérisé par le fait qu'**au moins l'un des modules de commande (102) est mis en oeuvre en tant que contrôleur de suivi.

13. Procédé selon au moins l'une des revendications précédentes, **caractérisé par le fait qu'**au moins l'un des modules de commande (102) est conçu comme un régulateur.

14. Procédé selon au moins l'une des revendications précédentes, **caractérisée par le fait qu'**un module de commande distinct (102) est affecté à chaque degré de liberté contrôlable.

15. Produit de programme informatique comprenant des instructions qui, lorsque le programme est exécuté à l'aide d'au moins un processeur, amènent le processeur à exécuter la méthode selon au moins l'une des revendications suivantes 1 à 14.

Fig. 1

Fig. 2

Fig. 3

Fig. 4

Fig. 5

Fig. 6

# EP 4 164 840 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2021123057 A1

### In der Beschreibung aufgeführte Nicht-Patentliteratur

- **Y. NAKAMURA ; H. HANAFUSA ; T. YOSHIKAWA.** Taskpriority based redundancy control of robot manipulators. *The International Journal of Robotics Research,* 1987, vol. 6 (2), 3-15
- **G. ANTONELLI.** Stability Analysis for Prioritized closedloop inverse kinematic algorithms for redundant robotic systems. *IEEE Transactions on Robotics,* 2009, vol. 25 (5), 985-994
- **F. KANEHIRO ; H. HIRUKAWA ; S. KAJITA.** Open-hrp: Open Architecture Humanoid Robotics Platform. *The International Journal of Robotics Research,* 2004, vol. 23 (2), 155-165
- **L. SENTIS ; O. KHATIB.** Synthesis of Whole-Body behaviors through hierarchical control of behavioral primitives. *International Journal of Humanoid Robotics,* 2005, vol. 2 (4), 505-518
- **L. SENTIS ; J. PARK ; O. KHATIB.** Compliant Control of multicontact and center-of-mass behaviors in humanoid robots. *IEEE Transactions on Robotics,* 2010, vol. 26 (3), 483-501
- **J. PETERS ; M. MISTRY ; F. UDWADIA ; J. NAKANISHI ; S. SCHAAL.** A unifying framework for robot control with redundant dofs. *Autonomous Robots,* 2008, vol. 24, 1-12
- **ADRIEN ESCANDE ; NICOLAS MANSARD ; PIERRE-BRICE WIEBER.** Hierarchical quadratic programming: fast online humanoidrobot motion generation. *The International Journal of Robotics Research,* 2014, vol. 33 (7), 1006-1028
- **K. BOUYARMANE ; A. KHEDDAR.** On Weight-Prioritized multitask control of humanoid robots. *IEEE Transactions on Automatic Control,* Juni 2018, vol. 63 (6), ISSN 2334-3303, 1632-1647
- **M. A. HOPKINS ; D. W. HONG ; A. LEONESSA.** Compliant locomotion using whole-body control and divergent component of motion tracking. *IEEE Int. Conf. on Robotics and Automation (ICRA),* Mai 2015, 5726-5733
- **T. KOOLEN ; S. BERTRAND ; G. THOMAS ; T. DE BOER ; T. WU ; J. SMITH ; J. ENGLSBERGER ; J. PRATT.** Design of a Momentum-Based Control Framework and application to the humanoid robot atlas. *International Journal of Humanoid Robotics,* 2016, vol. 13 (01), 1650007
- **J. ENGLSBERGER ; G. MESESAN ; A. WERNER ; C. OTT.** Torque-Based Dynamic Walking - a long way from simulation to experiment. *IEEE Int. Conf. on Robotics and Automation (ICRA),* 2018, 440-447
- **B. PADEN ; B. RIEDLE.** A Positive-Real Modification of a dass of nonlinear controllers for robot manipulators. *1988 American Control Conference,* Juni 1988, 1782-1785
- **A. DIETRICH.** Whole-Body Impedance Control of Wheeled Humanoid Robots. Springer International Publishing, 2016, vol. 116
- **B. HENZE ; M. A. ROA ; CH. OTT.** Passivity-based whole-body balancing for torque-controlled humanoid robots in multi-contact scenarios. *The International Journal of Robotics Research,* 2016, vol. 35 (12), 1522-1543
- **A. ALBU-SCHÄFFER.** Dynamic walking on compliant and uneven terrain using dem and passivity-based wholebody control. *IEEE-RAS 19th Int. Conf. on Humanoid Robots (Humanoids),* 2019, 25-32
- **A. DIETRICH ; C. OTT.** Hierarchical Impedance-Based tracking control of kinematically redundant robots. *IEEE Transactions on Robotics,* 2020, vol. 36 (1), ISSN 1941-0468, 204-221
- QP-based task-space hybrid / parallel control for multi-contact motion in a torque-controlled humanoid robot. **CISNEROS RAFAEL et al.** 2019 IEEE-RAS 19TH INTERNATIONAL CONFERENCE ON HUMANOID ROBOTS (HUMANOIDS). IEEE, 15. Oktober 2019, 663-670
- Robust Humanoid Control Using a QP Solver with Integral Gains. **CISNEROS RAFAEL et al.** 2018 IEEE/RSJ INTERNATIONAL CONFERENCE ON INTELLIGENT ROBOTS AND SYSTEMS (IROS). IEEE, 01. Oktober 2018, 7472-7479

- **J. ACKERMANN.** Parameter space design of robust control systems. *IEEE Transactions on Automatic Control,* Dezember 1980, vol. 25 (6), ISSN 2334-3303, 1058-1072
- **G. ANTONELLI.** Stability Analysis for Prioritized closed-loop inverse kinematic algorithms for redundant robotic systems. *IEEE Transactions on Robotics,* 2009, vol. 25 (5), 985-994
- **S. CHIAVERINI.** Singularity-robust task-priority redundancy resolution for real-time kinematic control of robot manipulators. *IEEE Transactions on Robotics and Automation,* Juni 1997, vol. 13 (3), 398-410
- **A. DIETRICH ; C. OTT ; A. ALBU-SCHÄFFER.** Multi-objective compliance control of redundant manipulators: hierarchy, control, and stability. *IEEE/RSJ Int. Conf. on Intelligent Robots and Systems,* November 2013, 3043-3050
- **J. ENGLSBERGER ; A. WERNER ; C. OTT ; B. HENZE ; M. A. ROA ; G. GAROFALO ; R. BURGER ; A. BEYER ; O. EIBERGER ; K. SCHMID.** Overview of the torque-controlled humanoid robot TORO. *IEEE-RAS Int. Conf. on Humanoid Robots,* November 2014, 916-923
- **J. ENGLSBERGER ; C. OTT ; A. ALBU-SCHÄFFER.** Three-Dimensional Bipedal Walking Control Based on divergent component of motion. *IEEE Transactions on Robotics,* April 2015, vol. 31 (2), ISSN 1941-0468, 355-368
- **F. KANEHIRO ; H. HIRUKAWA ; S. KAJITA.** Openhrp: Open Architecture Humanoid Robotics Platform. *The International Journal of Robotics Research,* 2004, vol. 23 (2), 155-165
- **T . KOOLEN ; S. BERTRAND ; G. THOMAS ; T. DE BOER ; T. WU ; J. SMITH ; J. ENGLSBERGER ; J. PRATT.** Design of a Momentum-Based Control Framework and application to the humanoid robot atlas. *International Journal of Humanoid Robotics,* 2016, vol. 13 (01), 1650007
- **G. MESESAN ; J. ENGLSBERGER ; G. GAROFALO ; C. OTT ; A. ALBU-SCHÄFFER.** Dynamic walking on compliant and uneven terrain using dem and passivity-based whole-body control. *IEEE-RAS 19th Int. Conf. on Humanoid Robots (Humanoids),* 2019, 25-32
- **R. M. MURRAY.** A mathematical introduction to robotic manipulation. CRC press, 2017
- **Y. NAKAMURA ; H. HANAFUSA ; T. YOSHIKAWA.** Task- priority based redundancy control of robot manipulators. *The International Journal of Robotics Research,* 1987, vol. 6 (2), 3-15
- **L. RIGHETTI ; J. BUCHLI ; M. MISTRY ; S. SCHAAL.** Inverse dynamics control of floating-base robots with external constraints: A unified view. *IEEE Int. Conf. on Robotics and Automation,* Mai 2011, 1085-1090